# EUROPEAN PATENT APPLICATION

(11) **EP 4 819 122 A1**
(43) Date of publication of application: **07.10.2026**
(21) Application number: 24920679.8
(22) Date of filing: 11.09.2024
(51) Int. Cl.: G09G 3/34, G02F 1/1335, G02F 1/13357

(54) **DISPLAY APPARATUS AND LIGHT SOURCE APPARATUS THEREOF**

(30) Priority: 22.01.2024 KR 20240009812
(71) Applicant: Samsung Electronics Co., Ltd., Suwon-si, Gyeonggi-do 16677 (KR)
(72) Inventor: JEON, Dukjin, Suwon-si Gyeonggi-do 16677 (KR); KIM, Taeyeon, Suwon-si Gyeonggi-do 16677 (KR); KIM, Hyungsuk, Suwon-si Gyeonggi-do 16677 (KR); LEE, Youngmin, Suwon-si Gyeonggi-do 16677 (KR)
(74) Representative: Appleyard Lees IP LLP
(86) International application number: PCT/KR2024/013785
(87) International publication number: WO 2025/159263

(57) **Abstract**

The display apparatus comprises an image display unit and a light source apparatus, wherein the light source apparatus includes: a substrate including a substrate body that extends in a first direction, and a plurality of substrate bars that extend in a second direction from the substrate body and are spaced apart from each other in the first direction; a plurality of light sources which include a plurality of first light sources provided on the substrate body and a plurality of second light sources provided on the plurality of substrate bars, and which emit light toward the image display unit; at least one dimming block including at least one of the plurality of light sources; and a driving element which is provided only on the substrate body from among the substrate body and the plurality of substrate bars, and which drives the at least one dimming block, the at least one dimming block including at least one from among a first dimming block that includes only a first light source, a second dimming block that includes only a second light source, and a third dimming block that includes the first light source and the second light source.

## Description

### [Technical Field]

The present disclosure relates to a display apparatus and a light source device thereof.

### [Background Art]

A display apparatus is a kind of output apparatus that converts acquired or stored electrical information into visual information and displays the visual information for users. The display apparatus is used in various fields, such as homes, workplaces, etc.

Display apparatuses include monitors connected to personal computers (PCs) or server computers, portable computers, navigation terminals, general televisions, Internet Protocol Televisions (IPTVs), portable terminals such as smart phones, tablet PCs, personal digital assistants (PDAs), or cellular phones, various displays used to play images such as advertisements or movies in industrial sites, or various types of audio/video systems.

The display apparatus includes a light source device for converting electrical information into visual information. The light source device includes a plurality of light sources for emitting light independently.

Each of the plurality of light sources includes, for example, a Light Emitting Diode (LED) or an Organic Light Emitting Diode (OLED).

Local dimming technology is applied to the light source device of the display to improve the contrast ratio of images. The plurality of light sources are divided into a plurality of dimming blocks, and each of driving elements is capable of controlling the driving current that is supplied to the light sources included in one or more dimming blocks.

The driving elements and light sources (for example, light-emitting diodes) are fixed on the substrate by using surface mount technology (SMT).

Recently, a plurality of driving elements and light sources are used to implement a high contrast ratio, and therefore, the substrate requires a plurality of wires.

### [Disclosure]

### [Technical Problem]

An aspect of the disclosure provides a light source device having an improved substrate structure that may reduce product cost and manufacturing cost, and a display apparatus capable of implementing local dimming in various ways in the light source device.

Another aspect of the disclosure provides a light source device having an improved substrate structure that may reduce product cost and manufacturing cost, and a display apparatus capable of reducing noise of a plurality of dimming blocks in the light source device.

Still another aspect of the disclosure provides a light source device having an improved substrate structure capable of reducing product cost and manufacturing cost, and a display apparatus capable of implementing the same brightness of a plurality of dimming blocks in the light source device.

The technical aspects that may be achieved by the present disclosure are not limited to the above-mentioned aspects, and other aspects not mentioned will be clearly understood by one of ordinary skill in the technical art to which the present disclosure belongs from the following description.

### [Technical Solution]

A display apparatus according to an embodiment of the present disclosure may include an image display; and a light source device, wherein the light source device may include: a substrate including a substrate body extending along a first direction, and a plurality of substrate bars extending from the substrate body in a second direction and spaced apart from each other along the first direction; a plurality of light sources including a plurality of first light sources provided on the substrate body and a plurality of second light sources provided on the plurality of substrate bars, the plurality of light sources configured to radiate light toward the image display; at least one dimming block including at least one light source among the plurality of light sources; and a driving element provided on only the substrate body among the substrate body and the plurality of substrate bars and configured to drive the at least one dimming block, and the at least one dimming block may include at least one among a first dimming block including the first light sources, a second dimming block including the second light sources, or a third dimming block including the first light sources and the second light sources.

A light source device according to an embodiment of the present disclosure may include: a substrate including a substrate body extending in a first direction, and a plurality of substrate bars extending from the substrate body in a second direction and arranged to be spaced apart from each other along the first direction; a plurality of light sources including a plurality of first light sources provided on the substrate body and a plurality of second light sources provided on the plurality of substrate bars, and configured to radiate light toward an image display; at least one dimming block including at least one light source among the plurality of light sources; and a driving element provided on only the substrate body among the substrate body and the plurality of substrate bars and configured to drive the at least one dimming block, wherein the at least one dimming block may include at least one among a first dimming block including the first light sources, a second dimming block including the second light sources, or a third dimming block including the first light sources and the second light sources.

### [Description of Drawings]

FIG. 1 shows a display apparatus according to an embodiment of the present disclosure.
FIG. 2 is an exploded view of a display apparatus according to an embodiment of the present disclosure.
FIG. 3 is a cross-sectional view of a display panel of a display apparatus according to an embodiment of the present disclosure.
FIG. 4 shows a substrate and a bottom chassis of a display apparatus according to an embodiment of the present disclosure.
FIG. 5 is an enlarged view of some portions of a substrate and a bottom chassis in a display apparatus according to an embodiment of the present disclosure.
FIG. 6 is an enlarged view of a portion of a substrate in a display apparatus according to an embodiment of the present disclosure.
FIG. 7 is an enlarged view of a portion of an example of a light source device in a display apparatus according to an embodiment of the present disclosure.
FIG. 8 shows an example of a dimming block of a light source device in a display apparatus according to an embodiment of the present disclosure.
FIG. 9 is a control block diagram of a display apparatus according to an embodiment of the present disclosure.
FIG. 10 shows an example of a connection structure between a dimming driver, a driving element, and a dimming block of a display apparatus according to an embodiment of the present disclosure.
FIG. 11 shows an example of a connection structure between a driving element and a dimming block of a light source device in a display apparatus according to an embodiment of the present disclosure.
FIG. 12 shows an example of substrate wires of a light source device in a display apparatus according to an embodiment of the present disclosure.
FIG. 13 shows an example of adjusting currents of a plurality of dimming blocks based on distances between a driving element and the plurality of dimming blocks of a light source device in a display apparatus according to an embodiment of the present disclosure.

### [Modes of the Invention]

Configurations illustrated in the embodiments and the drawings described in the present specification are only the example embodiments of the present disclosure, and thus it is to be understood that various modified examples, which may replace the embodiments and the drawings described in the present specification, are possible when filing the present application.

Also, like reference numerals or symbols denoted in the drawings of the present specification represent members or components that perform the substantially same functions.

The singular form of a noun corresponding to an item may include one or a plurality of the items unless clearly indicated otherwise in a related context.

In this document, phrases, such as "A or B", "at least one of A and B", "at least one of A or B," "A, B or C," "at least one of A, B and C," and "at least one of A, B, or C", may include any one or all possible combinations of items listed together in the corresponding phrase among the phrases.

As used herein, the terms "portion", "part, "module, or "member" may be implemented as software or hardware. According to embodiments, a plurality of "portions", "parts, "modules, or "members" may be implemented as a single component, or a single "portion", "part, "module, or "member" may include a plurality of components.

Also, the terms used in the present specification are merely used to describe embodiments, and are not intended to limit and/or restrict the disclosure. An expression used in the singular encompasses the expression of the plural, unless it has a clearly different meaning in the context. In the present specification, it is to be understood that the terms such as "including" or "having," etc., are intended to indicate the existence of the features, numbers, operations, components, parts, or combinations thereof disclosed in the specification, and are not intended to preclude the possibility that one or more other features, numbers, operations, components, parts, or combinations thereof may exist or may be added.

Also, it will be understood that, although the terms including ordinal numbers, such as "first", "second", etc., may be used herein to describe various components, these components should not be limited by these terms. These terms are only used to distinguish one component from another. For example, a first component could be termed a second component, and, similarly, a second component could be termed a first component, without departing from the scope of the present disclosure. As used herein, the term "and/or" includes any and all combinations of one or more of associated listed items.

A certain (e.g., a first) component is referred to as "coupled" or "connected" with or without the terms "functionally" or "communicatively" to another (e.g., second) component. When mentioned, it means that any of the certain components can be connected to the other component directly (e.g., by wire), wirelessly, or via a third component.

It will be understood that when a certain component is referred to as being "connected to", "coupled to", "supported by" or "in contact with" another component, it can be directly or indirectly connected to, coupled to, supported by, or in contact with the other component. When a component is indirectly connected to, coupled to, supported by, or in contact with another component, it may be connected to, coupled to, supported by, or in contact with the other component through a third component.

It will also be understood that when a certain component is referred to as being "on" or "over" another component, it can be directly on the other component or intervening components may also be present.

Meanwhile, in the following description, the terms "up-down direction", "front-rear direction", etc. are defined based on the drawings, and the shapes and positions of the components are not limited by the terms. For example, the following terms "front" and "rear" may be defined based on an X direction shown in the drawings. The following terms "upper" and "lower" may be defined based on a Z direction shown in the drawings. The following terms "left" and "right" may be defined based on a Y axis shown in the drawings. The following term "vertical direction" may be the Z direction shown in the drawings. The following term "horizontal direction" may be the Y direction shown in the drawings.

Hereinafter, an embodiment of the present disclosure will be described in detail with reference to the accompanying drawings.

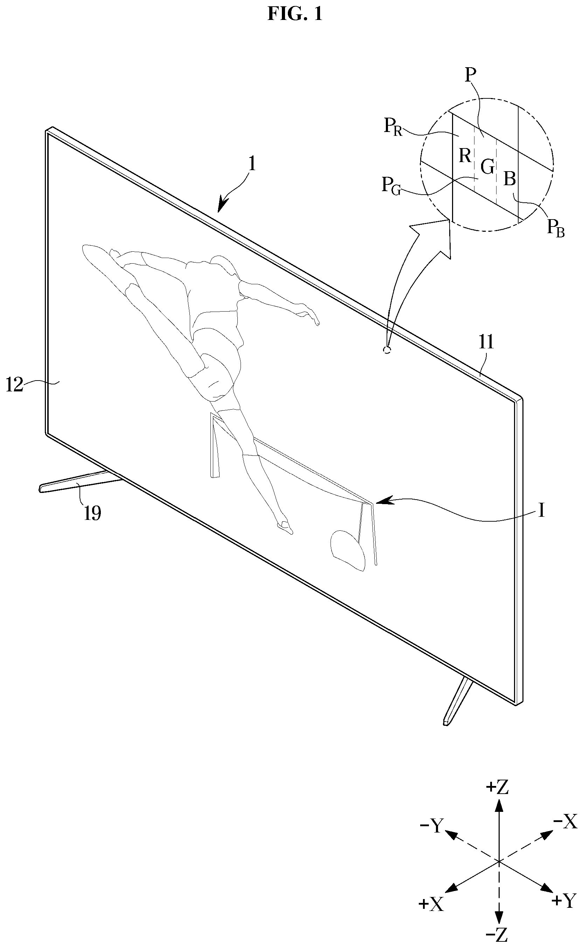

FIG. 1 shows a display apparatus according to an embodiment of the present disclosure.

Referring to FIG. 1, a display apparatus 1 according to an embodiment of the present disclosure may be an apparatus capable of processing an image signal received from outside and visually displaying a processed image. FIG. 1 shows an example in which the display apparatus 1 is a television. However, the display apparatus 1 is not limited to a television. For example, the display apparatus 1 may be implemented as various types, such as a monitor as a kind of a computer output device, a portable multimedia device, a portable communication device, etc., and the type of the display apparatus 1 is not limited as long as the display apparatus 1 is capable of visually displaying images.

In addition, the display apparatus 1 may be a Large Format Display (LFD) that is installed outdoor, such as the roof of a building or a bus stop. Herein, the outdoor is not necessarily limited to outside, and the display apparatus 1 according to an embodiment of the disclosure may be installed at any place where many people come in and out, such as subway stations, shopping malls, movie theaters, places of business, stores, etc., although the place is indoor.

In FIG. 1, the display apparatus 1 is shown as being a flat display apparatus having a flat screen, although not limited thereto. However, the display apparatus 1 according to a concept of the present disclosure may be a curved display apparatus, or a bendable or flexible display apparatus capable of changing between a flat state and a curved state. Also, a configuration according to the present disclosure may be applied to various types of display apparatuses regardless of screen sizes or aspect ratios of the display apparatuses.

The display apparatus 1 may receive content including a video signal and an audio signal from various content sources, and output video and audio corresponding to the video signal and the audio signal. For example, the display apparatus 1 may receive content data through a broadcasting reception antenna or a wired cable, receive content data from a content reproducing apparatus, or receive content data from a content providing server of a content provider.

The display apparatus 1 may display an image corresponding to video data, and output sound corresponding to audio data. For example, the display apparatus 1 may restore a plurality of image frames included in video data and successively display the plurality of image frames. Also, the display apparatus 1 may restore an audio signal included in audio data and successively output sound according to the audio signal.

As shown in FIG. 1, the display apparatus 1 may include a main body 11 and a screen 12 for displaying an image I.

The display apparatus 1 may be installed in a standing type on an indoor/outdoor floor or furniture, or in a wall-mounted type on a wall or inside a wall. For example, the display apparatus 1 may include a supporting leg 19 provided at a lower portion of the main body 11 to be installed in a standing type on an indoor/outdoor floor or furniture.

The main body 11 may form an outer appearance of the display apparatus 1. Inside the main body 11, components for enabling the display apparatus 1 to perform various functions such as displaying an image I may be installed.

The display apparatus 1 may display an image I. More specifically, the screen 12 may be formed on a front surface of the main body 11, and the display apparatus 1 may display an image I through the screen 12. For example, the screen 12 may display a still image or a moving image. Also, the screen 12 may display a two-dimensional plane image or a three-dimensional stereoscopic image using a user's binocular disparity.

In the screen 12, a plurality of pixels P may be formed. An image I displayed on the screen 12 may be formed by light emitted from the plurality of pixels P. For example, light emitted from the plurality of pixels P may be combined like a mosaic to form an image I on the screen 12.

Each of the plurality of pixels P may emit light of various brightness and various colors. More specifically, each of the plurality of pixels P may include sub pixels P_{R}, P_{G}, and P_{B}, and the sub pixels P_{R}, P_{G}, and P_{B} may include a red sub pixel P_{R} capable of emitting red light, a green sub pixel P_{G} capable of emitting green light, and a blue sub pixel P_{B} capable of emitting blue light. For example, the red light may correspond to light of a wavelength range from about 620 nm (nanometer, one billionth of a meter) to about 750 nm, the green light may correspond to light of a wavelength range from about 495 nm to about 570 nm, and the blue light may correspond to light of a wavelength range from about 450 nm to about 495 nm.

Each of the plurality of pixels P may emit light of various brightness and various colors by a combination of light emitted from the red sub pixel P_{R}, the green sub pixel P_{G}, and the blue sub pixel P_{B}.

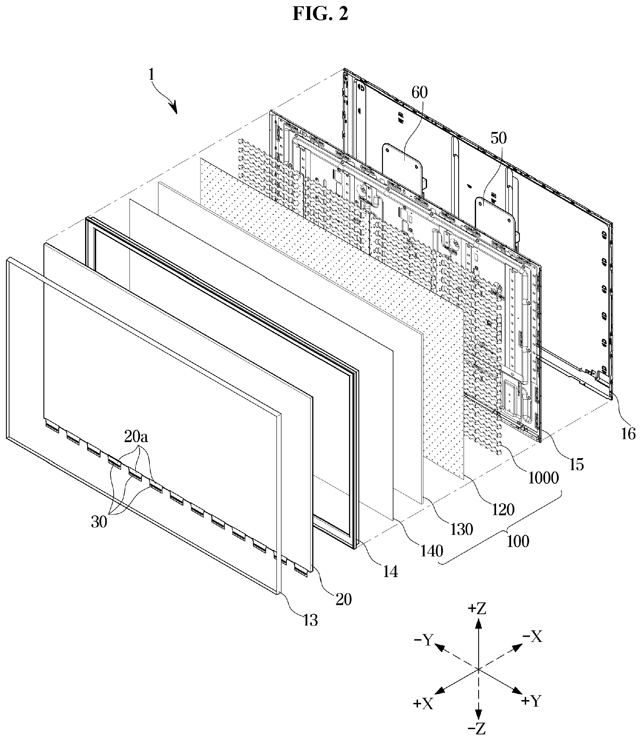

FIG. 2 is an exploded view of a display apparatus according to an embodiment of the present disclosure.

Referring to FIG. 2, inside the main body 11 of the display apparatus 1 according to an embodiment of the disclosure, various components for generating an image I on the screen 12 may be installed.

For example, the display apparatus 1 may include a display panel 20. The display panel 20 may be installed in the main body 11. The display panel 20 may include an image display that displays an image I. The screen 12 described with reference to FIG. 1 may be formed on a front surface of the display panel 20.

For example, the display panel 20 may have an approximately rectangular shape. More specifically, a length of horizontal sides of the display panel 20 may be different from a length of vertical sides of the display panel 20. That is, the display panel 20 may have long sides and short sides. The display panel 20 may be in a shape of a rectangular plate, although not limited thereto. However, the display panel 20 may be in a shape of a square plate of which the long and short sides have the approximately same length.

The display panel 20 may have various sizes. Also, a ratio of the short sides to the long sides of the display panel 20 is not limited to general ratios such as 16:9 or 4:3 and may be an arbitrary ratio.

In the display apparatus 1 according to an embodiment of the disclosure, the display panel 20 may be a non-emissive display panel such as a Liquid Crystal Display (LCD).

In one side of the display panel 20, a cable 20a for transmitting image data to the display panel 20, and a Display Driver Integrated Circuit (DDI) (hereinafter, referred to as a 'panel driver') 30 for processing digital image data and outputting an analog image signal may be provided.

The cable 20a may electrically connect a control assembly 50 or a power assembly 60 to the panel driver 30, and also, electrically connect the panel driver 30 to the display panel 20. The cable 20a may include a flexible flat cable or a film cable.

The panel driver 30 may receive image data and power from the control assembly 50 or the power assembly 60 through the cable 20a, and transmit image data and a driving current to the display panel 20 through the cable 20a.

Also, the cable 20a and panel driver 30 may be implemented as a film cable, a chip on film (COF), a Tape Carrier Packet (TCP), etc. In other words, the panel driver 30 may be positioned on the cable 20a, although not limited thereto. Also, the panel driver 30 may be positioned on the display panel 20.

A structure of the display panel 20 will be described in detail, below.

The display apparatus 1 may include a backlight unit 100 for radiating light toward the display panel 20. The backlight unit 100 may be provided in the main body 11. The backlight unit 100 may be positioned behind the display panel 20 to radiate light toward a front direction in which the display panel 20 is positioned. More specifically, the backlight unit 100 may be configured with a surface light source. The display panel 20 may block or transmit light emitted from the backlight unit 100.

The backlight unit 100 may include a point light source for emitting monochromatic light or white light, and may refract, reflect, and scatter light to convert light emitted from the point light source into uniform surface light. The backlight unit 100 may emit uniform surface light toward the front direction by refracting, reflecting, and scattering light emitted from the point light source.

As shown in FIG. 2, the backlight unit 100 may include a light source device 1000. The light source device 1000 may generate light and emit the light. More specifically, the light source device 1000 may emit monochromic light or white light.

Details about the light source device 1000 will be described below.

As shown in FIG. 2, the backlight unit 100 may include a reflective sheet 120 for reflecting light. The reflective sheet 120 may reflect light toward the front direction or toward an approximately front direction.

For example, the reflective sheet 120 may be attached onto a front side of the light source device 1000. More specifically, the reflective sheet 120 may be attached onto a front surface of a substrate 1200.

For example, the light source device 1000 may emit light from the front surface of the reflective sheet 120 in all directions. Light emitted from the light source device 1000 may be directed toward a diffuser plate 130 which will be described below, and light may also be emitted from the light source device 1000 toward the reflective sheet 120 and then the reflective sheet 120 may reflect the light emitted toward the reflective sheet 120 toward the diffuser plate 130.

Alternatively, light emitted from the light source device 1000 may pass through various objects, such as the diffuser plate 130, an optical sheet 140, etc., and a part of the light may be reflected from surfaces of the diffuser plate 130, the optical sheet 140, etc. The reflective sheet 120 may reflect the reflected light toward a front direction.

As shown in FIG. 2, the backlight unit 100 may include the diffuser plate 130 for uniformly diffusing light. The diffuser plate 130 may be positioned in front of the light source device 1000 and the reflective sheet 120. The diffuser plate 130 may uniformly disperse light emitted from the light source device 1000 and then emit the light in the front direction.

As shown in FIG. 2, the backlight unit 100 may include the optical sheet 140 for further improving brightness and brightness uniformity of emitted light. The optical sheet 140 may refract and scatter light emitted from a front surface of the diffuser plate 130. For example, the optical sheet 140 may include various kinds of sheets, such as a diffuser sheet, a prism sheet, a reflective polarizing sheet 144, a quantum dot sheet, etc.

The display apparatus 1 may include the control assembly 50 that controls operations of the backlight unit 100 and the display panel 20, and the power assembly 60 that supplies power to the backlight unit 100 and the display panel 20. The control assembly 50 and the power assembly 60 may be provided in the main body 11.

For example, the control assembly 50 may include a control circuit that controls operations of the display panel 20 and the backlight unit 100. The control circuit may process image data received from an external content source. The control circuit may transmit image data to the display panel 20 and dimming data to the backlight unit 100.

For example, the power assembly 60 may include a power circuit that supplies power to the display panel 20 and the backlight unit 100. The power circuit may supply power to the control assembly 50, the backlight unit 100, and the display panel 20.

The control assembly 50 and the power assembly 60 may be implemented with a printed circuit board and various circuits mounted on the printed circuit board. For example, the power circuit may include a capacitor, a coil, a resistor device, a processor, and a power circuit board on which the capacitor, the coil, the resistor device, and the processor are mounted. Also, the control circuit may include a memory, a processor, and a control circuit board on which the memory and the processor are mounted.

The display apparatus 1 may include a display case that supports various components of the main body 11 of the display apparatus 1. In other words, the various components of the main body 11 may be accommodated inside the display case. The display case may form an appearance of the display apparatus 1.

For example, the display case may support the display panel 20. For example, the display case may support the backlight unit 100. For example, the display case may support the control assembly 50. For example, the display case may support the power assembly 60.

For example, the display apparatus 1 may include a top chassis 13. The top chassis 13 may support the front surface and sides of the display panel 20. For example, the top chassis 13 may be provided in a shape of an approximately quadrangular frame.

The top chassis 13 may support the front surface of the display panel 20 by forming a bezel positioned toward the front direction of the display apparatus 1. However, according to the display apparatus 1 having a very narrow bezel or being a bezel-less type, the top chassis 13 may support only the sides of the display panel 20. Alternatively, according to a bottom chassis 15 supporting the sides of the display panel 20, the display apparatus 1 may not include the top chassis 13.

For example, the display apparatus 1 may include the bottom chassis 15. The bottom chassis 15 may cover a rear side of the display panel 20. The bottom chassis 15 may be coupled to a rear side of the top chassis 13. The bottom chassis 15 may support various components of the display apparatus 1, such as the backlight unit 100, the control assembly 50, the power assembly 60, etc.

The bottom chassis 15 may be formed in a shape of an approximately flat plate, although not limited thereto. The bottom chassis 15 may include a material having high thermal conductivity to dissipate heat generated in a light source 31 to the outside. For example, the bottom chassis 15 may include a metal material, such as aluminum or stainless steel (SUS), or a plastic material such as acrylonitrile butadiene styrene (ABS).

For example, the display apparatus 1 may include a middle mold 14. The middle mold 14 may be positioned between the top chassis 13 and the bottom chassis 15. For example, the middle mold 14 may support at least some components of the backlight unit 100.

For example, the display apparatus 1 may include a rear cover 16. The rear cover 16 may be positioned behind the bottom chassis 15, and cover the bottom chassis 15 and various components (for example, the control assembly 50, the power assembly 60, etc.) installed behind the bottom chassis 15.

Meanwhile, unlike FIG. 2, the display case of the display apparatus 1 according to a concept of the present disclosure may not include some components of a top chassis, a middle mold, a bottom chassis, and a rear cover.

The components of the display apparatus 1 described above with reference to FIG. 2 are only an example for describing the display apparatus 1 according to a concept of the present disclosure, and the concept of the present disclosure is not limited thereto. The display apparatus 1 according to a concept of the present disclosure may include various components for performing a function of providing images through a screen.

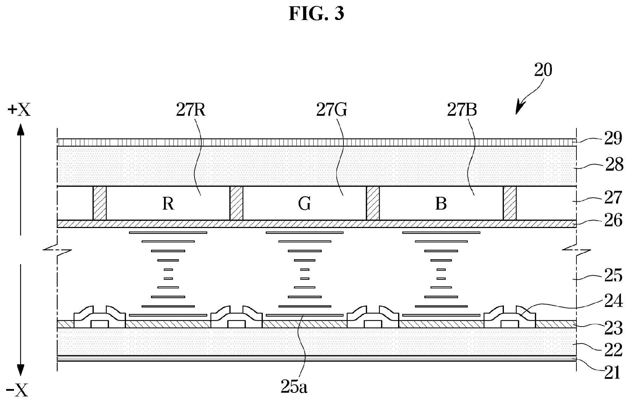

FIG. 3 is a cross-sectional view of a display panel of a display apparatus according to an embodiment of the present disclosure.

Referring to FIG. 3, the display panel 20 included in the display apparatus 1 according to an embodiment of the disclosure may be configured as a LCD panel to block or transmit light emitted from the backlight unit 100. By an operation of blocking or transmitting light emitted from the backlight unit 100, performed by the display panel 20, an image I may be formed on the front surface of the display panel 20.

The front surface of the display panel 20 may form the screen 12 of the display apparatus 1 as described above. In the display panel 20, the plurality of pixels P may be provided. The plurality of pixels P provided in the display panel 20 may block or transmit light emitted from the backlight unit 100 independently, and light transmitted by the plurality of pixels P may form an image I that is displayed on the screen 12.

For example, as shown in FIG. 3, the display panel 20 may include a first polarizing film 21, a first transparent substrate 22, a pixel electrode 23, a thin film transistor 24, a liquid crystal layer 25, a common electrode 26, a color filter 27, a second transparent substrate 28, and a second polarizing film 29.

The first transparent substrate 22 and the second transparent substrate 28 may fix and support the pixel electrode 23, the thin film transistor 24, the liquid crystal layer 25, the common electrode 26, and the color filter 27. The first and second transparent substrates 22 and 28 may be made of tempered glass or a transparent resin.

On outer surfaces of the first and second transparent substrates 22 and 28, the first polarizing film 21 and the second polarizing film 29 may be respectively positioned.

The first polarizing film 21 and the second polarizing film 29 may transmit specific light and block the other light. For example, the first polarizing film 21 may transmit light having a magnetic field vibrating in a first direction and block the other light. Also, the second polarizing film 29 may transmit light having a magnetic field vibrating in a second direction and block the other light, wherein the second direction may be orthogonal to the first direction. Accordingly, a polarizing direction of light transmitted by the first polarizing film 21 may be orthogonal to a vibration direction of light transmitted by the second polarizing film 29. As a result, light may not be transmitted through the first polarizing film 21 and the second polarizing film 29 simultaneously.

The color filer 27 may be positioned on an inner surface of the second transparent substrate 28.

The color filter 27 may include a red filter 27R transmitting red light, a green filter 27G transmitting green light, and a blue filter 27B transmitting blue light, wherein the red filter 27R, the green filter 27G, and the blue filter 27B may be positioned side by side. An area in which the color filter 27 is formed may correspond to the pixel P described above. An area in which the red filter 27R is formed may correspond to the red sub pixel P_{R}, an area in which the green filter 27G is formed may correspond to the green sub pixel P_{G}, and an area in which the blue filter 27B is formed may correspond to the blue sub pixel P_{B}.

On an inner surface of the first transparent substrate 22, the pixel electrode 23 may be positioned, and on an inner surface of the second transparent substrate 28, the common electrode 26 may be positioned.

The pixel electrode 23 and the common electrode 26 may be made of a metal material carrying electricity, and generate an electric field for changing alignment of liquid crystal molecules 25a configuring the liquid crystal layer 25 which will be described below.

The pixel electrode 23 and the common electrode 26 may be made of a transparent material, and transmit light received from outside. For example, the pixel electrode 23 and the common electrode 26 may be made of Indium Tin Oxide (ITO), Indium Zinc Oxide (IZO), an Ag nano wire, a carbon nano tube (CNT), graphene, or 3,4-ethylenedioxythiophene (PEDOT). On the inner surface of the first transparent substrate 22, the thin film transistor 24 may be positioned.

The thin film transistor 24 may transmit or block a current flowing through the pixel electrode 23. For example, according to turning-on (closing) or turning-off (opening) of the thin film transistor 24, an electric field may be formed or removed between the pixel electrode 23 and the common electrode 26.

The thin film transistor 24 may be made of poly-silicon, and formed by a semiconductor process, such as lithography, deposition, ion implantation, etc.

The liquid crystal layer 25 may be formed between the pixel electrode 23 and the common electrode 26, and the liquid crystal layer 25 may be filled with the liquid crystal molecules 25a.

Liquid crystal means an intermediate state between a solid (crystal) state and a liquid state. Most of liquid crystal materials are organic compounds. A molecule of a liquid crystal material is in the shape of a thin, long rod. Also, the molecular arrangement of the liquid crystal material is irregular when seen in a specific direction, but appears as a regular crystalloid pattern when seen in another direction. Accordingly, the liquid crystal has both the fluidity of a liquid and the optical anisotropy of a crystal (solid).

Also, liquid crystal may show an optical property according to a change in electric field. For example, the direction of the molecular arrangement of liquid crystal may change according to a change in electric field. In the case in which an electric field is formed in the liquid crystal layer 25, liquid crystal molecules 25a of the liquid crystal layer 25 may be arranged according to the direction of the electric field, and in the case in which no electric field is formed in the liquid crystal layer 25, the liquid crystal molecules 25a may be arranged irregularly or according to an alignment layer (not shown). As a result, the optical property of the liquid crystal layer 25 may change according to the presence/absence of an electric field passing through the liquid crystal layer 25.

A structure of the display panel 20 described above with reference to FIG. 3 is only an exemplary structure of the display panel of the display apparatus according to a concept of the present disclosure, and the concept of the present disclosure is not limited thereto.

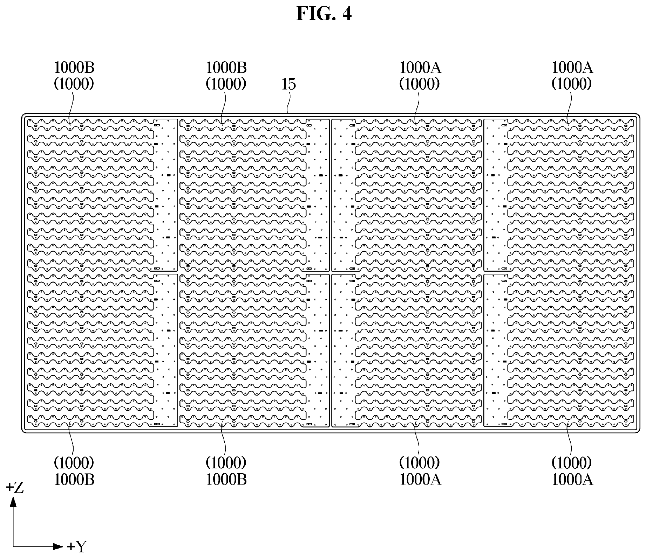

FIG. 4 shows a substrate and a bottom chassis of a display apparatus according to an embodiment of the present disclosure.

Referring to FIG. 4, the display apparatus 1 according to an embodiment of the present disclosure may include a plurality of light source devices 1000.

The plurality of light source devices 1000 may be positioned in front of the bottom chassis 15 (in an +X direction). For example, each of the plurality of light source devices 1000 may be mounted on the bottom chassis 15. That is, each of the plurality of light source devices 1000 may be fixed to the bottom chassis 15 or supported by the bottom chassis 15.

For example, the plurality of light source devices 1000 may be formed in shapes corresponding to each other. In other words, the plurality of light source devices 1000 may have approximately the same structure.

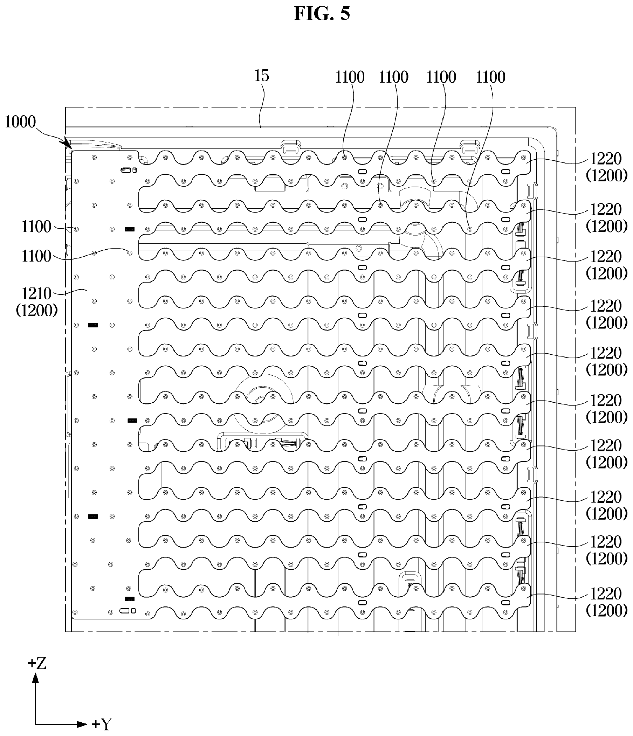

For example, as shown in FIG. 5, a light source device 1000A located on a right side (+Y direction) of the display apparatus 1 among the plurality of light source devices 1000 and a light source device 1000B located on a left side (-Y direction) of the display apparatus 1 among the plurality of light source devices 1000 may be opposite to each other in vertical and horizontal directions (that is, the light source device 1000A and the light source device 1000B are arranged in a state of being rotated by 180 degrees with respect to each other on a X axis). According to this arrangement, the plurality of light source devices 1000 may be arranged to be bilaterally symmetrical to each other with respect to a horizontal center of the display apparatus 1, and both sides of the display apparatus 1 from the horizontal center of the display apparatus 1 may have the same brightness.

As such, because the plurality of light source devices 1000 are designed to have approximately the same shape, waste of parts may be prevented and efficiency of a manufacturing process may be improved, resulting in a reduction of manufacturing cost or manufacturing expense.

However, the present disclosure is not limited thereto, and at least some of the plurality of light source devices 1000 may have different shapes.

FIG. 4 shows an example in which the display apparatus 1 includes 8 light source devices 1000. However, the number of the light source devices 1000 included in the display apparatus 1 is not limited to that shown in FIG. 4. For example, the light source devices 1000 included in the display apparatus 1 may be less or more than the light source devices 1000 shown in FIG. 4. Alternatively, for example, the display apparatus 1 may include a single light source device 1000 integrated into one body.

Hereinafter, a structure of a light source device 1000 among the plurality of light source devices 1000 will be described in detail. According to an embodiment, the structure of the light source device 1000 which will be described below may be applied to the plurality of light source devices 1000.

FIG. 5 is an enlarged view of some portions of a substrate and a bottom chassis in a display apparatus according to an embodiment of the present disclosure.

Referring to FIG. 5, the light emitting device 1000 of the display apparatus 1 according to an embodiment of the present disclosure may include a plurality of light sources 1100, and a substrate 1200 on which the plurality of light sources 1100 are mounted.

The plurality of light sources 1100 may be arranged in a preset pattern to emit light with uniform brightness. The plurality of light sources 1100 may be arranged such that distances between a light source and adjacent light sources thereof are the same. However, the arrangement of the plurality of light sources 1100 is not limited to the above-described arrangement, and the plurality of light source sources 1100 may be arranged in various ways to emit light with uniform brightness.

A light source 1100 among the plurality of light sources 1100 will be described. Descriptions about a structure and function of the light source 1100 may be applied to the plurality of light sources 1100.

The light source 1100 may adopt a device capable of emitting, upon receiving power, monochromatic light (light having a specific wavelength, for example, blue light) or white light (for example, mixed light of red light, green light, and blue light) in various directions. For example, the light source 1100 may include a Light Emitting Diode (LED). The light emitting diode may have various sizes, and for example, the light emitting diode may include a mini LED and/or a micro LED.

The light source 1100 may further include an optical dome or an optical lens that covers the light emitting diode. The optical dome may cover the light emitting diode. The optical dome may prevent or suppress the light emitting diode from being damaged by a mechanical action from outside and/or by a chemical action.

The light emitting diode constructing the light source 1100 may be attached directly onto the substrate 1200 by a Chip On Board (COB) method. For example, the light source 1100 may include a light emitting diode in which a light emitting diode chip or a light emitting diode die is attached directly on the light source substrate 112 without any packaging.

The light emitting diode constructing the light source 1100 may be manufactured in a flip chip type. The light emitting diode of the flip chip type may be formed by welding, upon attaching a light emitting diode being a semiconductor device to the substrate 1200, an electrode pattern of a semiconductor device as it is to the substrate 1200 without using a middle medium, such as a metal lead (wire) or a ball grid array (BGA). As such, by using neither a metal lead (wire) nor a ball grid array, the light emitting device 1100 including the light emitting diode of the flip chip type may be miniaturized.

So far, the light emitting diode of the flip chip type welded directly to the substrate 1200 by the chip on board method has been described. However, the light source 1100 is not limited to a light emitting diode of a flip chip type. For example, the light source 1100 may include a light emitting diode of a package type.

The light source 1100 may emit light in all directions in front of the reflective sheet 120. Light emitted from the light source 1100 may be emitted toward the diffuser plate 130 and emitted toward the reflective sheet 120 from the light source 1100. The reflective sheet 120 may reflect light emitted toward the reflective sheet 120 toward the diffuser plate 130.

Light emitted from the light source 1100 may pass through various objects, such as the diffuser plate 130, the optical sheet 140, etc. While light passes through the diffuser plate 130 and the optical sheet 140, a part of the light may be reflected from the surfaces of the diffuser plate 130 and the optical sheet 140. The reflective sheet 120 may reflect the light reflected by the diffuser plate 130 and the optical sheet 140.

A process in which light reflected by the light source 1100 and light reflected by the reflective sheet 120 move toward the display panel 20 has been described above.

The substrate 1200 may fix the plurality of light sources 1100 such that the plurality of light sources 1100 do not change in position. Also, the substrate 1200 may supply power to the light sources 1100 to enable the plurality of light sources 1100 to emit light.

The substrate 1200 may include a synthetic resin board and/or a tempered glass board and/or a printed circuit board (PCB) on which the plurality of light sources 1100 are fixed and a conductive power supply line for supplying power to the plurality of light sources 1100 is formed.

Various kinds of wires for supplying power to the plurality of light sources 1100 may be formed on the substrate 1200. To form the various kinds of wires on the substrate 1200, the printed circuit board may be formed with a plurality of layers.

Meanwhile, the substrate 1200 may include a plurality of substrate bars 1220.

The substrate bars 1220 may be components forming at least a part of the substrate 1200 described above, and include a printed circuit board extending in one direction.

At least a part of the plurality of light sources 1100 may be respectively mounted on the plurality of substrate bars 1220. At least a part of the plurality of light sources 1100 may be mounted on front surfaces of the plurality of substrate bars 1220. Here, the front surfaces of the plurality of substrate bars 1220 may be one surfaces of the plurality of substrate bars 1220 toward the display panel 20.

Each of the plurality of substrate bars 1220 may be configured as a printed circuit board on which the light sources 1100 are mounted.

The plurality of substrate bars 1220 may be spaced apart from each other. The plurality of substrate bars 1220 may be spaced apart from each other along a first direction Z. For example, the first direction Z in which the plurality of substrate bars 1220 are spaced apart from each other may be approximately parallel to a vertical direction (that is, up-down direction) of the display apparatus 1. The plurality of substrate bars 1220 may be arranged parallel to each other while being spaced apart from each other.

Each of the plurality of substrate bars 1220 may be formed to have approximately a bar shape. More specifically, each of the plurality of substrate bars 1220 may have a width in the first direction Z and may extend in the second direction Y that is different from the first direction Z. That is, each of the plurality of substrate bars 1220 may have a shape in which a length in the second direction Y is longer than a width in the first direction Z.

For example, a width direction of each of the plurality of substrate bars 1220 may be approximately parallel to the vertical direction (that is, up-down direction) of the display apparatus 1. For example, a direction in which each of the plurality of substrate bars 1220 extends may be approximately parallel to a horizontal direction (that is, left-right direction) of the display apparatus 1.

For example, the direction in which each of the plurality of substrate bars 1220 extends may be parallel to a long side direction of the display apparatus 1. For example, the width direction of each of the plurality of substrate bars 1220 may be parallel to a short side direction of the display apparatus 1.

A direction in which the plurality of substrate bars 1220 are arranged to be spaced apart from each other may be parallel to the width direction of each of the plurality of substrate bars 1220. In other words, the plurality of substrate bars 1220 may be arranged to be spaced apart from each other along the first direction Z, which is the width direction of each of the plurality of substrate bars 1220.

Each of the plurality of substrate bars 1220 may extend in a direction that is different from the direction in which the plurality of substrate bars 1220 are spaced apart from each other. More specifically, each of the plurality of substrate bars 1220 may extend in a direction (Y direction) that is orthogonal to the direction (Z direction) in which the plurality of substrate bars 1220 are spaced apart from each other. That is, the first direction and the second direction described above may be orthogonal to each other.

Unlike this, the direction in which the plurality of substrate bars 1220 are arranged to be spaced apart from each other and the direction in which each of the plurality of substrate bars 1220 extends may have a preset angle with each other, but the angle may not be exactly perpendicular.

For example, the plurality of substrate bars 1220 may be arranged in such a way as to be spaced a constant distance apart from each other in the first direction Z. In other words, distances between pairs of adjacent substrate bars 1220 among the plurality of substrate bars 1220 in the first direction Z may all be approximately the same. As a result, brightness uniformity of the display apparatus 1 may be improved.

For example, the plurality of substrate bars 1220 may be formed to have shapes that correspond to each other. For example, the widths of the plurality of substrate bars 1220 in the first direction (Z direction) may correspond to each other. For example, the extension lengths of the plurality of substrate bars 1220 in the second direction (Y direction) may correspond to each other. For example, the plurality of substrate bars 1220 may be formed with sizes that correspond to each other.

For example, each of the plurality of substrate bars 1220 may be mounted on the bottom chassis 15. According to each of the plurality of substrate bars 1220 being mounted on the bottom chassis 15 and maintaining a fixed position, the plurality of light sources 1100 mounted on the plurality of substrate bars 1220 may be stably positioned at designed positions, respectively.

The reflective sheet 120 may be attached on a front surface of each of the plurality of substrate bars 1220.

The substrate 1200 of the display apparatus 1 may include a substrate body 1210. The substrate body 1210 may be a component forming a portion of the substrate 1200 described above, and may include a printed circuit board.

The plurality of substrate bars 1220 may be connected to the substrate body 1210. The plurality of substrate bars 1220 may be supported by the substrate body 1210. For example, the plurality of substrate bars 1220 may be connected to one side of the substrate body 1210.

The plurality of substrate bars 1220 may extend from the substrate body 1210. For example, each of the plurality of substrate bars 1220 may extend from the substrate body 1210 in the second direction Y. For example, each of the plurality of substrate bars 1220 may extend from one side of the substrate body 1210 in the second direction Y.

For example, the substrate body 1210 may extend along the first direction Z. For example, a length of the substrate body 1210 in the first direction Z may be longer than a width of the substrate body 1210 in the second direction Y. In this case, the substrate body 1210 may extend along the direction in which the plurality of substrate bars 1220 are arranged and thus have a structure to which a larger number of substrate bars 1220 are connected. In addition, in this case, because the plurality of substrate bars 1220 extend from one side of the substrate body 1210 in the second direction Y which is the width direction (that is, a direction with a relatively short length) of the substrate body 1210, the plurality of substrate bars 1220 may extend with a longer length.

For example, the substrate body 1210 may be mounted on the bottom chassis 15. According to the substrate body 1210 being mounted on the bottom chassis 15 and maintaining a fixed position, the plurality of light sources 1100 mounted on the substrate body 1210 may be stably arranged at designed positions, respectively. In addition, according to the substrate body 1210 being mounted on the bottom chassis 15, the plurality of substrate bars 1220 connected to the substrate body 1210 may be more stably supported by the substrate body 1210.

For example, a part of the plurality of light sources 1100 may be mounted on the substrate body 1210. A part of the plurality of light sources 1100 may be mounted on a front surface of the substrate body 1210. Here, the front surface of the substrate body 1210 may be one surface of the substrate body 1210 toward the display panel 20.

The substrate body 1210 may be configured as a printed circuit board on which the light sources 1100 are mounted.

The reflective sheet 120 may be attached onto the front surface of the substrate body 1210. For example, one reflective sheet 120 may be attached onto the front surfaces of the substrate body 1210 and the plurality of substrate bars 1220. In this case, uniformity of brightness due to light reflected by the reflective sheet 120 may be improved, and a process of attaching the reflective sheet 120 onto the front surfaces of the substrate body 1210 and the plurality of substrate bars 1220 may be simplified. However, the present disclosure is not limited thereto, and a plurality of reflective sheets 120 that are distinct from each other may be attached onto the front surfaces of the substrate body 1210 and the plurality of substrate bars 1220.

For example, the substrate body 1210 and the plurality of substrate bars 1220 may be integrated into one body. In other words, the substrate body 1210 and the plurality of substrate bars 1220 may be connected to each other to form an integrated substrate 1200. The substrate 1200 may be formed as an integral printed circuit board including the substrate body 1210 and the plurality of substrate bars 1220. However, unlike this, the substrate body 1210 and the plurality of substrate bars 1220 may be connected to each other through a process of assembling separate components not formed integrally with each other.

The structure of the light source device 1000, such as the substrate body 1210 and the substrate bar 1220 described above with reference to FIG. 5, may be only an example, and a concept of the present disclosure is not limited thereto.

Although FIG. 5 illustrates an embodiment in which each of the plurality of substrate bars 1220 extends in a right direction (+Y direction) from the substrate body 1210, the present disclosure is not limited thereto, and for example, the plurality of substrate bars 1220 may extend in a left direction (-Y direction) from the substrate body 1210.

Also, although FIG. 5 illustrates an embodiment in which the substrate body 1210 extends in the vertical direction (Z direction) of the display apparatus 1, the present disclosure not limited thereto, and for example, the substrate body 1210 may extend in the horizontal direction (Y direction).

Also, although FIG. 5 illustrates an embodiment in which each of the plurality of substrate bars 1220 extends in the horizontal direction (Y direction) from one side of the substrate body 1210 in the horizontal direction (Y direction), the present disclosure is not limited thereto, and for example, each of the plurality of substrate bars 1220 may extend in the vertical direction (Z direction) from one side of the substrate body 1210 in the vertical direction (Z direction). In this case, the plurality of substrate bars 1220 may be arranged to be spaced apart from each other in the horizontal direction (Y direction).

In addition, unlike the above description, the first direction which is the width direction of each of the plurality of substrate bars 1220, the first direction in which the plurality of substrate bars 1220 are arranged to be spaced apart from each other, the first direction in which the substrate body 1210 extends, or the second direction in which each of the plurality of substrate bars 1220 extends, may not be parallel to either the vertical direction (Z direction) or the horizontal direction (Y direction) of the display apparatus 1.

However, for convenience of description, the following description will be based on an embodiment in which the first direction is parallel to the vertical direction (Z direction) of the display apparatus 1 and the second direction is parallel to the horizontal direction (Y direction) of the display apparatus 1.

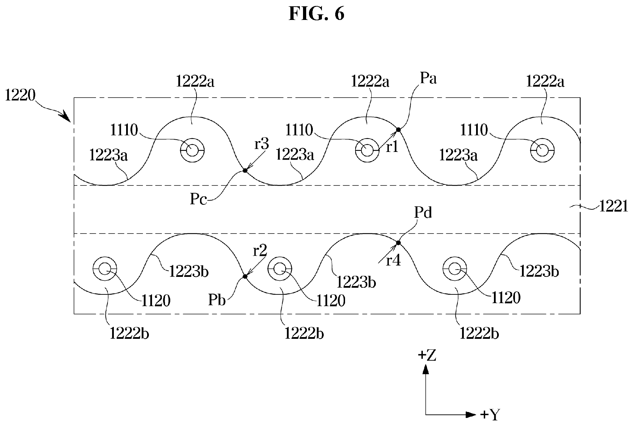

FIG. 6 is an enlarged view of a portion of a substrate in a display apparatus according to an embodiment of the present disclosure.

A structure of one substrate bar 1220 among the plurality of substrate bars 1220 shown in FIG. 5 will be described in detail with reference to FIG. 6. The structure of the substrate bar 1220 shown in FIG. 6 may be applied to a structure of each of the plurality of substrate bars 1220.

Referring to FIG. 6, the substrate bar 1220 of the display apparatus 1 according to an embodiment of the present disclosure may include a central extension portion 1221 extending in one direction, and protrusions 1222a and 1222b protruding from the central extension portion 1221. Each of the central extension portion 1221 and the protrusions 1222a and 1222b may be a part of the substrate bar 1220 and may constitute a part of the substrate 1200.

The central extension portion 1221 may extend in the second direction (Y direction). A width direction of the central extension portion 1221 may be parallel to the first direction (Z direction). An extension length of the central extension portion 1221 in the second direction (Y direction) may be longer than a width of the central extension portion 1221 in the first direction (Z direction).

The central extension portion 1221 may be provided at a center portion of the substrate bar 1220. The central extension portion 1221 may include an area that passes a center of the substrate bar 1220 and extends in the second direction (Y direction).

For example, as shown in FIG. 6, the central extension portion 121 may include an area having an approximately rectangular bar shape.

The substrate bar 1220 may include a plurality of first protrusions 1222a protruding from one side of the central extension portion 1221. Each of the plurality of first protrusions 1222a may protrude from one side of the central extension portion 1221 in the first direction (Z direction). Each of the plurality of first protrusions 1222a may protrude from one side of the central extension portion 1221 toward outside of the central extension portion 1221. Each of the plurality of first protrusions 1222a may extend in the first direction (Z direction) from the central extension portion 1221. For example, each of the plurality of first protrusions 1222a may extend upward from an upper side of the central extension portion 1221.

For example, the first protrusions 1222a may be connected to the central extension portion 1221 and formed integrally with the central extension portion 1221.

The plurality of first protrusions 1222a may be arranged along the second direction (Y direction). For example, positions (in other words, heights in the vertical direction of the display apparatus 1) of the plurality of first protrusions 1222a in the first direction Z may correspond to each other.

For example, the plurality of first protrusions 1222a may be arranged at equal intervals along the second direction (Y direction).

For example, the plurality of first protrusions 1222a may have shapes corresponding to each other. For example, lengths of the plurality of first protrusions 1222a protruding from the central extension portion 1221 in the first direction (Z direction) may correspond to each other.

Some of the plurality of light sources 1100 mounted on the substrate bar 1220 may be mounted on the plurality of first protrusions 1222a. Hereinafter, a light source mounted on each of the plurality of first protrusions 1222a is referred to as a first side light source 1110. For example, one first side light source 1110 may be mounted on one first protrusion 1222a, but is not limited thereto.

A plurality of first side light sources 1110 may be arranged at positions spaced apart from the central extension portion 1221 in the first direction (Z direction). As shown in FIG. 6, the plurality of first side light sources 1110 may be arranged to be biased upward from the central extension 1221.

The plurality of first side light sources 1110 may be arranged along the second direction (Y direction). For example, positions of the plurality of first side light sources 1110 in the first direction Z may correspond to each other.

For example, the plurality of first side light sources 1100 may be arranged at equal intervals along the second direction (Y direction).

The substrate bar 1220 may include a plurality of second protrusions 1222b protruding from another side of the central extension portion 1221. Each of the plurality of second protrusions 1222b may protrude from another side of the central extension portion 1221 in the first direction (Z direction). Here, the other side of the central extension portion 1221 may mean another side that is different from the one side of the central extension portion 1221, from which the first protrusions 1222a protrude. For example, the plurality of second protrusions 1222b may protrude from another side of the central extension portion 1221 that is opposite to the one side of the central extension portion 1221, from which the plurality of first protrusions 1222a protrude, in a direction that is opposite to the direction in which the plurality of first protrusions 1222a protrude. Each of the plurality of first protrusions 1222a may protrude from the other side of the central extension portion 1221 toward the outside of the central extension portion 1221.

Each of the plurality of second protrusions 122b may extend from the central extension portion 1221 in the first direction (Z direction). For example, each of the plurality of second protrusions 1222b may extend downward from a lower side of the central extension portion 1221.

For example, the second protrusions 1222b may be connected to the central extension portion 1221 and formed integrally with the central extension portion 1221.

The plurality of second protrusions 1222b may be arranged along the second direction (Y direction). For example, positions (in other words, heights in the vertical direction of the display apparatus 1) of the plurality of second protrusions 1222b in the first direction Z may correspond to each other.

For example, the plurality of second protrusions 1222b may be arranged at equal intervals along the second direction (Y direction).

For example, the plurality of second protrusions 1222b may have shapes corresponding to each other. For example, lengths of the plurality of second protrusions 1222b protruding from the central extension portion 1221 in the first direction (Z direction) may correspond to each other.

For example, a protrusion length of each of the plurality of first protrusions 1222a from the central extension portion 1221 may be approximately equal to an extension length of each of the plurality of second protrusions 1222b from the central extension portion 1221.

Some of the plurality of light sources 1100 mounted on the substrate bar 1220 may be mounted on the plurality of second protrusions 1222b. Hereinafter, a light source mounted on each of the plurality of second protrusions 1222b is referred to as a second side light source 1120. For example, one second side light source 1120 may be mounted on one second protrusion 1222b, but is not limited thereto.

A plurality of second side light sources 1120 may be arranged at positions spaced apart from the central extension portion 1221 in the first direction (Z direction). As shown in FIG. 6, the plurality of second side light sources 1120 may be arranged to be biased downward from the central extension 1221.

The plurality of second side light sources 1120 may be arranged along the second direction (Y direction). For example, positions of the plurality of second side light sources in the first direction Z may correspond to each other.

For example, the plurality of second side light sources 1120 may be arranged at equal intervals along the second direction (Y direction).

Here, some areas of the central extension portion 1221 from which the plurality of first protrusions 1222a protrude and other areas of the central extension portion 1221 from which the plurality of second protrusions 1222b extend may be arranged alternately along the second direction (Y direction). In other words, the first protrusions 1222a and the second protrusions 1222b may be arranged alternately. In one substrate bar 1220, the plurality of first protrusions 1222a and the plurality of second protrusions 1222b may be arranged not to be aligned in the first direction Z.

By this configuration, the first side light sources 1110 and the second side light sources 1120 may be arranged alternately along the second direction (Y direction). In one substrate bar 1220, the plurality of light sources 1100 may be arranged such that the first side light sources 1110 arranged on one side in the first direction Z and the second side light sources 1120 arranged on another side are arranged alternately along the second direction (Y direction), and as a result, uniformity of brightness due to the plurality of light sources 1100 may be improved. In other words, on one substrate bar 1220, the plurality of light sources 1100 may be arranged in a zigzag pattern.

Because the plurality of light sources 1100 are arranged on each substrate bar 1220 as described above, a distance between adjacent light sources 1100 on a pair of adjacent substrate bars 1220 among the plurality of substrate bars 1220 may be reduced, and brightness and brightness uniformity of the display apparatus 1 may be improved.

The substrate bar 1220 may include a plurality of first recess portions 1223a. Each of the plurality of first recess portions 1223a may be formed between a pair of adjacent first protrusions 1222a among the plurality of first protrusions 1222a. That is, the first recess portions 1222a may be defined as some areas of the substrate bar 1220 formed between pairs of adjacent first protrusions 1222a.

The plurality of first recess portions 1223a may be provided on one side of the central extension portion 1221 in the first direction Z. For example, the plurality of first recess portions 1223a may be provided on an upper side of the central extension portion 1221.

Each of the plurality of first recess portions 1223a may be formed with a shape concavely depressed inwardly toward the central extension portion 1221 relatively compared to the plurality of first protrusions 1222a.

The plurality of first recess portions 1223a may be arranged along the second direction (Y direction). For example, positions (in other words, heights in the vertical direction of the display apparatus 1) of the plurality of first recess portions 1223a in the first direction Z may correspond to each other.

For example, the plurality of first recess portions 1223a may be arranged at equal intervals along the second direction (Y direction).

For example, the plurality of first recess portions 1223a may have shapes that correspond to each other.

The substrate bar 1220 may include a plurality of second recess portions 1223b. Each of the plurality of second recess portions 1223a may be formed between a pair of adjacent second protrusions 1222b among the plurality of second protrusions 1222b. That is, the second recess portions 1223b may be defined as some areas of the substrate bar 1220 formed between pairs of adjacent second protrusions 1222b.

The plurality of second recess portions 1223b may be provided on another side of the central extension portion 1221 in the first direction Z. Here, the other side of the central extension portion 1221 may mean another side that is different from the one side of the central extension portion 1221, at which the first recess portions 1223a are provided. For example, the plurality of second recess portions 1223b may be provided on a lower side of the central extension portion 1221.

Each of the plurality of second recess portions 1223b may be formed with a shape concavely depressed inwardly toward the central extension portion 1221 relatively compared to the plurality of second protrusions 1222b.

The plurality of second recess portions 1223b may be arranged along the second direction (Y direction). For example, positions (in other words, heights in the vertical direction of the display apparatus 1) of the plurality of second recess portions 1223b in the first direction Z may correspond to each other.

For example, the plurality of second recess portions 1223b may be arranged at equal intervals along the second direction (Y direction).

For example, the plurality of second recess portions 1223b may have shapes that correspond to each other.

Some areas of the central extension portion 1221 at which the plurality of first recess portions 1223a are provided on one side and other areas of the central extension portion 1221 at which the plurality of second recess portions 1223b are provided on another side may be arranged alternately along the second direction (Y direction). In other words, the first recess portions 1223a and the second recess portions 1223b may be arranged alternately. In one substrate bar 1220, the plurality of first recess portions 1223a and the plurality of second recess portions 1223b may be arranged not to be aligned in the first direction Z.

For example, each of the plurality of first protrusions 1222a may be aligned with one second recess portion 1223b that is closest to the first protrusion 1222a among the plurality of second recess portions 1223b, in the first direction Z. That is, the plurality of first protrusions 1222a and the plurality of second recess portions 1223b may be respectively aligned in the first direction Z.

Also, for example, each of the plurality of second protrusions 1222b may be aligned with one first recess portion 1223a that is closest to the second protrusion 1222b among the plurality of first recess portions 1223a, in the first direction Z. That is, the plurality of second protrusions 1222b and the plurality of first recess portions 1223a may be respectively aligned in the first direction Z.

As a result, the substrate bar 1220 may have a shape that extends in a zigzag pattern.

A shape of an edge of each of the plurality of first recess portions 1223a may be different from a shape of an edge of each of the plurality of first protrusions 1222a. In other words, a shape of an outer side of each of the plurality of first recess portions 1223a may be different from a shape of an outer side of each of the plurality of first protrusions 1222a.

For example, a curvature of the edge of each of the plurality of first recess portions 1223a may be different from a curvature of the edge of each of the plurality of first protrusions 1222a. In other words, a curvature of the outer side of each of the plurality of first recess portions 1223a may be different from a curvature of the outer side of each of the plurality of first protrusions 1222a.

Alternatively, the shape of the edge of each of the plurality of first recess portions 1223a may be different from a shape of an edge of each of the plurality of second protrusions 1222b. In other words, the shape of the outer side of each of the plurality of first recess portions 1223a may be different from a shape of an outer side of each of the plurality of second protrusions 1222b.

For example, the curvature of the edge of each of the plurality of first recess portions 1223a may be different from a curvature of the edge of each of the plurality of second protrusions 1222b. In other words, the curvature of the outer side of each of the plurality of first recess portions 1223a may be different from a curvature of the outer side of each of the plurality of second protrusions 1222b.

A shape of an edge of each of the plurality of second recess portions 1223b may be different from the shape of the edge of each of the plurality of second protrusions 1222b. In other words, a shape of an outer side of each of the plurality of second recess portions 1223b may be different from the shape of the outer side of each of the plurality of second protrusions 1222b.

A curvature of the edge of each of the plurality of second recess portions 1223b may be different from the curvature of the edge of each of the plurality of second protrusions 1222b. In other words, a curvature of the outer side of each of the plurality of second recess portions 1223b may be different from the curvature of the outer side of each of the plurality of second protrusions 1222b.

Alternatively, the shape of the edge of each of the plurality of second recess portions 1223b may be different from the shape of the edge of each of the plurality of first protrusions 1222a. In other words, the shape of the outer side of each of the plurality of second recess portions 1223b may be different from the shape of the outer side of each of the plurality of first protrusions 1222a.

For example, the curvature of the edge of each of the plurality of second recess portions 1223b may be different from the curvature of the edge of each of the plurality of first protrusions 1222a. In other words, the curvature of the outer side of each of the plurality of second recess portions 1223b may be different from the curvature of the outer side of each of the plurality of first protrusion 1222a.

Here, the 'edge of the first protrusion 1222a' and the 'outer side of the first protrusion 1222a' may be a part of an outer edge portion of the substrate bar 1220 and mean an outer edge portion of the substrate bar 1220 at which the first protrusion 1222a is provided. The 'edge of the first protrusion 1222a' may be used as meaning corresponding to the term such as 'outline of the first protrusion 1222a' or 'profile of the first protrusion 1222a'.

Likewise, the 'edge of the second protrusion 1222b' and 'outer side of the second protrusion 1222b' may be a part of an outer edge portion of the substrate bar 1220, and mean an outer edge portion of the substrate bar 1220 at which the second protrusion 1222b is provided. The 'edge of the second protrusion 1222b' may be used as meaning corresponding to the term such as 'outline of the second protrusion 1222b' or 'profile of the second protrusion 1222b'.

Likewise, the 'edge of the first recess portion 1223a' and the 'outer side of the first recess portion 1223a' may be a part of an outer edge portion of the substrate bar 1220, and mean an outer edge portion of the substrate bar 1220 at which the first recess portion 1223a is provided. In other words, the 'edge of the first recess portion 1223a' and 'outer side of the first recess portion 1223a' may be a part of an outer edge portion of the substrate bar 1220, and mean an outer edge portion between outer edges of a pair of adjacent first protrusions 1222a. The 'edge of the first recess portion 1223a' may be used as meaning corresponding to the term such as 'outline of the first recess portion 1223a' or 'profile of the first recess portion 1223a'.

Likewise, the 'edge of the second recess portion 1223b' and the 'outer side of the second recess portion 1223b' may be a part of an outer edge portion of the substrate bar 1220, and mean an outer edge portion of the substrate bar 1220 at which the second recess portion 1223b is provided. In other words, the 'edge of the second recess portion 1223b' and 'outer side of the second recess portion 1223b' may be a part of an outer edge portion of the substrate bar 1220, and mean an outer edge portion between outer edges of a pair of adjacent second protrusions 1222b. The 'edge of the second recess portion 1223b' may be used as meaning corresponding to the term such as 'outline of the second recess portion 1223b' or 'profile of the second recess portion 1223b'.

In addition, the meaning of the expression the 'shapes of the edges or outer sides of the recess portions 1223a and 1223b are different from the shapes of the edges or inner sides of the protrusions 1222a and 1222b' described above does not simply mean that the protrusions 1222a and 1222b have protruding shapes and the recess portions 1223a and 1223b have depressed shapes, and accordingly, the shapes are different from each other, but that shapes of lines connecting the respective edges are different from each other.

Referring to FIG. 6, more specifically, the edge of each of the plurality of first protrusions 1222a and the edge of each of the plurality of second recess portions 1223b may have different curvatures at points corresponding to each other in the first direction Z. For example, a first point Pa may be defined on one first protrusion 1222a among the plurality of first protrusions 1222a, and a second point Pd may be defined on one second recess portion 1223b among the plurality of second recess portions 1223b. The first point Pa and the second point Pd may be positioned to correspond to each other in the first direction Z. Here, a curvature (radius of curvature r1) at the first point Pa and a curvature (radius of curvature r4) at the second point Pd may be different from each other.

The edge of each of the plurality of second protrusions 1222b and the edge of each of the plurality of first recess portions 1223a may have different curvatures at points corresponding to each other in the first direction Z. For example, a third point Pb may be defined on one second protrusion 1222b among the plurality of second protrusions 1222b, and a fourth point Pc may be defined on one first recess portion 1223a among the plurality of first recess portions 1223a. The third point Pb and the fourth point Pc may be positioned to correspond to each other in the first direction Z. Here, a curvature (radius of curvature r2) at the third point Pb and a curvature (radius of curvature r3) at the third point Pc may be different from each other.

According to the embodiment shown in FIG. 6, the shape of the edge of each of the plurality of first protrusions 1222a may correspond to the shape of the edge of each of the plurality of second protrusions 1222b. In other words, the shape of the outer side of each of the plurality of first protrusions 1222a may correspond to the shape of the outer side of each of the plurality of second protrusions 1222b. More specifically, the curvature of the edge of each of the plurality of first protrusions 1222a may correspond to the curvature of the edge of each of the plurality of second protrusions 1222b. In other words, the curvature of the outer side of each of the plurality of first protrusions 1222a may correspond to the curvature of the outer side of each of the plurality of second protrusions 1222b.

Also, according to the embodiment shown in FIG. 6, the shape of the edge of each of the plurality of first recess portions 1223a may correspond to the shape of the edge of each of the plurality of second recess portions 1223b. In other words, the shape of the outer side of each of the plurality of first recess portions 1223a may correspond to the shape of the outer side of each of the plurality of second recess portions 1223b. More specifically, the curvature of the edge of each of the plurality of first recess portions 1223a may correspond to the curvature of the edge of each of the plurality of second recess portions 1223b. In other words, the curvature of the outer side of each of the plurality of first recess portions 1223a may correspond to the curvature of the outer side of each of the plurality of second recess portions 1223b.

In this case, the shape of the edge of each of the plurality of first protrusions 1222a and the plurality of second protrusions 1222b may be different from the shape of the edge of each of the plurality of first recess portions 1223a and the plurality of second recess portions 1223b. In other words, the shape of the outer side of each of the plurality of first protrusions 1222a and the plurality of second protrusions 1222b may be different from the shape of the outer side of each of the plurality of first recess portions 1223a and the plurality of second recess portions 1223b. More specifically, as shown in FIG. 6, the curvature of the edge of each of the plurality of first protrusions 1222a and the plurality of second protrusions 1222b may be different from the curvature of the edge of each of the plurality of first recess portions 1223a and the plurality of second recess portions 1223b. In other words, the curvature of the outer side of each of the plurality of first protrusions 1222a and the plurality of second protrusions 1222b may be different from the curvature of the outer side of each of the plurality of first recess portions 1223a and the plurality of second recess portions 1223b.

As such, according to the shape of each of the protrusions 1222a and 1222b of the substrate bar 1220 being different from the shape of each of the recess portions 1223a and 1223b, efficiency of a process of manufacturing the substrate 1200 may be improved. For example, in a process of manufacturing a plurality of substrates 1200 from a substrate substance, in a case where shapes of protrusions 1222a and 1222b and shapes of recess portions 1223a and 1223, which are aligned with each other, are different from each other, separating substrate bars 1220 included in the different substrates 1200 may be easier than in a case where the shapes of the protrusions 1222a and 1222b and the shapes of the recess portions 1223a and 1223 are the same. As a result, product manufacturing cost may be reduced.

More specifically, the curvature of the edge of each of the plurality of first protrusions 1222a may be greater than the curvature of the edge of each of the plurality of first recess portions 1223a. In other words, the radius of curvature r1 of the edge of each of the plurality of first protrusions 1222a may be smaller than the radius of curvature r3 of the edge of each of the plurality of first recessed portions 1223a.

Referring to FIG. 6, more specifically, a curvature at the first point Pa on the first protrusion 1222a may be smaller than a curvature at the fourth point Pc of the first recess portion 1223a.

The curvature of the edge of each of the plurality of first protrusions 1222a may be greater than the curvature of the edge of each of the plurality of second recess portions 1223b. In other words, the radius of curvature r1 at the edge of each of the plurality of first protrusions 1222a may be smaller than the radius of curvature r4 at the edge of each of the plurality of second recess portions 1223b.

Referring to FIG. 6, more specifically, the curvature at the first point Pa on the first protrusion 1222a may be smaller than the curvature at the second point Pd of the second recess portion 1223b.

The curvature of the edge of each of the plurality of second protrusions 1222b may be greater than the curvature of the edge of each of the plurality of second recess portions 1223b. In other words, the radius of curvature r2 at the edge of each of the second protrusions 1222b may be smaller than the radius of curvature r4 at the edge of each of the plurality of second recess portions 1223b.

Referring to FIG. 6, more specifically, the curvature at the third point Pb on the second protrusion 1222b may be smaller than the curvature at the second point Pd of the second recess portion 1223b.

The curvature of the edge of each of the plurality of second protrusions 1222b may be greater than the curvature of the edge of each of the plurality of first recess portions 1223a. In other words, the radius of curvature r2 at the edge of each of the plurality of second protrusions 1222b may be smaller than the radius of curvature r3 at the edge of each of the plurality of first recess portions 1223a.

Referring to FIG. 6, more specifically, the curvature at the third point Pb on the second protrusion 1222b may be smaller than the curvature at the fourth point Pc of the first recess portion 1223a.

That is, the curvature of each of the protrusions 1222a and 1222b provided in the substrate bar 1220 may be greater than the curvature of each of the recess portions 1223a and 1223b. In other words, the radius of curvature of each of the protrusions 122a and 1222b provided in the substrate bar 1220 may be smaller than the radius of curvature of each of the recess portions 1223a and 1223b.

In a case where the substrate bar 1220 has the above-described structure, efficiency of a process of manufacturing the substrate 1200 may be improved. For example, in a process of manufacturing a plurality of substrates 1200 from a substrate substance, in a case where curvatures of protrusions 1222a and 1222b are greater than curvatures of recess portions 1223a and 1223b aligned with the protrusions 1222a and 1222b, a process of separating substrate bars 1220 included in the different substrates 1200 may be more simplified. Also, in the process of manufacturing the plurality of substrates 1200 from the substrate substance, parts that are unnecessarily removed may be reduced, and waste of substances may be prevented, thereby reducing cost. As a result, product manufacturing cost may be reduced.

In addition, as the radius of curvature of each of the protrusions 1222a and 1222b in the substrate bar 1220 becomes smaller, a length protruding from the central extension portion 1221 relative to an area of each of the protrusions 1222a and 1222b may increase. As a result, a distance between adjacent light sources 1100 in a pair of adjacent substrate bars 1220 relative to an overall area of the plurality of substrate bars 1220 may decrease, and brightness and brightness uniformity of the display apparatus 1 may be improved.

In addition, as the radius of curvature of each of the recess portions 1223a and 1223b in the substrate bar 1220 becomes greater, areas of portions corresponding to the recess portions 1223a and 1223b of the substrate bar 1220 relative to a depth of each of the recess portions 1223a and 1223b depressed between a pair of protrusions 1222a or 1222b may be more reduced.

Meanwhile, FIG. 6 illustrates an embodiment in which the shapes (particularly, curvatures) of the edge of each of the plurality of first protrusions 1222a and the edge of each of the plurality of second protrusions 1222b correspond to each other, and the shapes (particularly, curvatures) of the edge of each of the plurality of first recess portions 1223a and the edge of each of the plurality of second recess portions 1223b correspond to each other. In this case, the process of manufacturing the substrate 1200 may be simplified, a layout of the substrate 1200 may be easily designed, thus efficiency may be improved in product designing and manufacturing processes, and product manufacturing cost may be reduced.

According to the substrate bar 1220 having this structure, efficiency of the process of manufacturing the substrate 1200 may be improved.

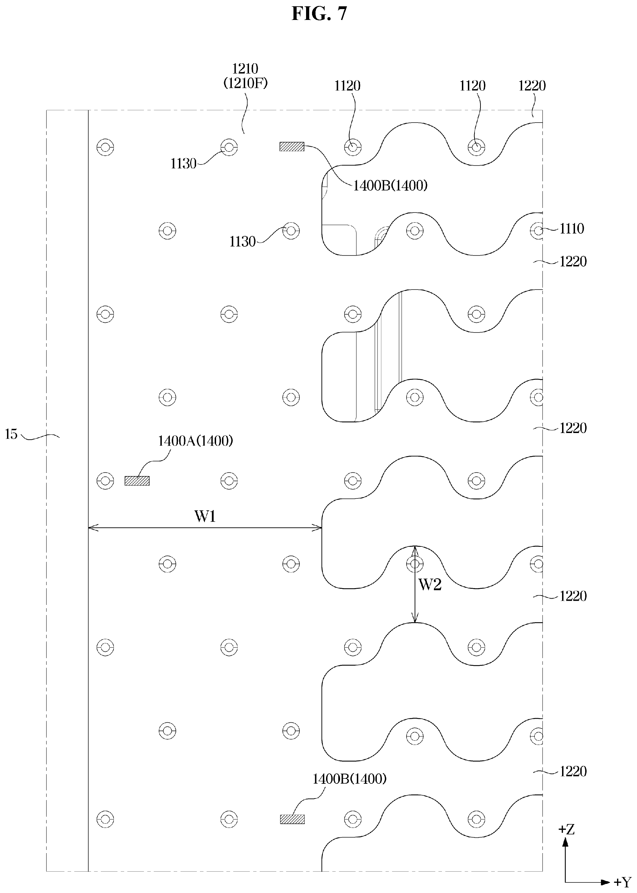

FIG. 7 is an enlarged view of a portion of an example of a light source device in a display apparatus according to an embodiment of the present disclosure.

Referring to FIG. 7, the substrate 1200 of the light source device 1100 may include the substrate body 1210 connected to the plurality of substrate bars 1220.

The substrate body 1210 may extend in the first direction Z.

Some of the plurality of light sources 1100 may be mounted on the substrate body 1210. Hereinafter, for convenience of description, a light source 1130 mounted on the substrate body 1210 is referred to as a body light source 1130.

For example, a plurality of body light sources 1130 may be mounted on the substrate body 1210. For example, the plurality of body light sources 1130 may be arranged at equal intervals.

A part of the plurality of body light sources 1130 may be aligned with a plurality of light sources (that is, the first bar light sources 1110) mounted on the plurality of first protrusions 1222a provided in any substrate bar 1220 among the plurality of substrate bars 1220, along the second direction Z. In this case, the body light sources 1130 and the first bar light sources 1110 may be arranged at equal intervals along the second direction Z.

Another part of the plurality of body light sources 1130 may be aligned with a plurality of light sources (that is, the second bar light sources 1120) mounted on the plurality of second protrusions 1222b provided in any substrate bar 1220 among the plurality of substrate bars 1220, along the second direction Z. In this case, the body light sources 1130 and the second bar light sources 1120 may be arranged at equal intervals along the second direction Z.

Due to this structure, brightness uniformity may be improved over the overall area of the screen provided by the display apparatus 1, including areas corresponding to positions of the plurality of substrate bars 1220 and an area corresponding to a position of the substrate body 1210.

The light source device 1000 may include a plurality of driving elements 1400 mounted on the substrate 1200. The plurality of driving elements 1400 may control at least some light sources 1100 among the plurality of light sources 1100 mounted on the same substrate 1200.

For example, the plurality of light sources 1100 may be divided into a plurality of dimming blocks including at least one light source 111, and the plurality of driving elements 1400 may control the plurality of dimming blocks.

For example, the plurality of driving elements 1400 may be implemented as a pixel Integrated Circuit (IC), an Active Matrix Integrated Circuit (AM IC), etc.

For example, as shown in FIG. 7, the plurality of driving elements 1400 may be mounted on a front surface 1210F of the substrate body 1210. The front surface 1210F of the substrate body 1210 may include one surface of the substrate body 1210 toward the display panel 20.

The plurality of driving elements 1400 may be mounted on the front surface 1210F of the substrate body 1210.

The substrate body 1210 may have a width W1 in the second direction Y and each of the plurality of substrate bars 1220 may have a width W2 in the first direction Z.

Because the plurality of driving elements 1400 are mounted on the substrate body 1210, the width W1 of the substrate body 1210 in the second direction Y may be larger than the width W2 of each of the plurality of substrate bars 1220 in the first direction Z on which none of the plurality of driving elements 1400 is mounted.

The reflective sheet 120 may be attached on the front surface of the substrate body 1210. Therefore, in the reflective sheet 120, through portions through which the plurality of driving elements 1400 pass may be formed at areas corresponding to positions of the plurality of driving elements 1400, and the plurality of driving elements 1400 may pass through corresponding through portions, respectively, to protrude forward from the reflective sheet 120.

In this case, reflectivity of the reflective sheet 120 may be reduced at the positions of the plurality of driving elements 1400 and the corresponding through portions. As a result, brightness uniformity of the display apparatus 1 may be reduced.

To overcome the problem, on the front surface 1210F of the substrate body 1210, the plurality of driving elements 1400 may be arranged at different positions in the first direction Z, and some driving elements 1400 of the plurality of driving elements 1400 may be arranged at different positions in the second direction Y from positions of the other driving elements 1400.

More specifically, as shown in FIG. 7, the plurality of driving elements 1400 may include driving elements 1400A on a first row and driving elements 1400B on a second row.

The driving elements 1400A on the first row may be arranged along the first direction Z. More specifically, driving elements 1400A included in the driving elements 1400A on the first row may be arranged in such a way as to be spaced apart from each other along the first direction Z.

Also, the driving elements 1400B on the second row may be arranged along the first direction Z. More specifically, driving elements 1400B included in the driving elements 1400B on the second row may be arranged in such a way as to be spaced apart from each other along the first direction Z.

Here, the driving elements 1400A on the first row and the driving element 1400B on the second row may be arranged in such a way as to be spaced apart from each other. More specifically, each driving element 1400A included in the driving elements 1400A on the first row and each driving element 1400B included in the driving elements 1400B on the second row may be arranged at different positions in the second direction Y. That is, the plurality of driving elements 1400A may be arranged in a zigzag pattern on the front surface 1210F of the substrate body 1210.

Due to this structure, brightness deterioration due to the driving elements 1400 may be prevented from being concentrated on a specific area and brightness uniformity of the display apparatus 1 may be improved.

Meanwhile, as shown in FIG. 7, because the plurality of driving elements 1400A and 1400B are mounted on the substrate body 1210 and arranged in a zigzag pattern along the first direction Z on the front surface 1210F of the substrate body 1210, wires of the substrate 1200 connected to the plurality of driving elements 1400A and 1400B may be simplified.

That is, in the related art, the plurality of driving elements 1400 are arranged on all of the substrate body 1210 and the plurality of substrate bars 1220 or only on the plurality of substrate bars 1220. Accordingly, the plurality of driving elements 1400 are scattered over the entire area of the substrate 1200, and the plurality of driving elements 1400 require complex wiring and a large number of via holes for wire connection. However, as shown in FIG. 7, when the plurality of driving elements 1400 are mounted in groups only on the substrate body 1210 and arranged in a zigzag pattern along the first direction Z of the substrate body 1210, the wires of the plurality of driving elements 1400 may be simplified.

Meanwhile, the display apparatus 1 may perform local dimming to vary brightness of light for each area of the light source device 1000 in conjunction with an output image in order to improve power consumption while increasing a contrast ratio.

For example, the display apparatus 1 may decrease brightness of light from the light sources 1100 of the light source device 1000 corresponding to a dark area of an image to make the dark area darker, and to make a bright area of the image brighter, the display apparatus 1 may increase brightness of light from the light sources 1100 of the light source device 1000 corresponding to the bright area of the image. As a result, a contrast ratio or contrast range of the image may be improved.

The display apparatus 1 may divide the light source device 1000 into a plurality of blocks and adjust a current independently for each block according to an input image. Image transmission of the display apparatus 1 may be performed through frame-based local dimming driving, and driving of current may be controlled according to the number of blocks of the divided light sources 1100 in the light source device 1000.

As a result, the display apparatus 1 may supply a smaller current to dimming blocks corresponding to a dark area of an input image and supply a larger current to dimming blocks corresponding to a bright area of the input image, thereby effectively improving a contrast ratio.

For local dimming, the plurality of light sources 1100 included in the light source device 1000 may be divided into a plurality of dimming blocks 200. Also, each of the plurality of dimming blocks 200 may include at least one light source. Light sources controlled with one circuit are referred to as a dimming block. The number of light sources included in one dimming block may be adjusted.

According to various embodiments, k light sources 1100 may be divided into n dimming blocks or m dimming blocks (k, n, and m are natural numbers). For example, k light sources 1100 may be divided into n dimming blocks including k/n light sources 1100. k/n may be a value resulting from dividing k by n.

The light source device 1000 may supply the same driving current to the light sources 1100 belonging to the same dimming block 200, and the light sources 1100 belonging to the same dimming block 200 may emit light having the same brightness.

Also, the light source device 1000 may supply different driving currents to light sources 1100 belonging to different dimming blocks 200 according to dimming data, and the light sources belonging to the different dimming blocks 200 may emit light having different brightness.

The light source device 1000 may diffuse light emitted from the plurality of light emitting devices 1100 to output surface light. The display panel 20 may include a plurality of pixels, and control each of the plurality of pixels to transmit or block light. An image may be formed by light that has passed through each of the plurality of pixels.

In this case, the light source device 1000 may turn off a plurality of light sources corresponding to a dark area of an image to make the dark area darker. As a result, the dark area of the image may become darker and a contrast ratio of the image may be improved.

As such, an operation, performed by the light source device 1000, of controlling the plurality of light sources to emit light at an area corresponding to a bright area of an image and not to emit light at an area corresponding to a dark area of the image is hereinafter called "local dimming".

For local dimming, the plurality of light sources 1100 included in the light source device 1000 may be divided into a plurality of dimming blocks. The number and arrangement of the dimming blocks are not limited.

Also, the plurality of driving elements 1400 of the light source device 1000 may control a driving current that is supplied to light sources included in each of the plurality of dimming blocks 200. Each of the driving elements 1400 may correspond to at least one dimming block 200. In other words, each of the driving elements 1400 may drive a dimming block 200.

The driving elements 1400 may be a driving integrated circuit chip for driving the plurality of dimming blocks 200.

In this way, because the light sources 1100 belonging to each dimming block 200 are connected to each other in series, the light sources 1100 included in the dimming block 200 may operate as one unit and form one light source block.

Therefore, hereinafter, "supplying a driving current to a dimming block" may be interpreted as having the same meaning as "supplying a driving current to light sources included in a dimming block." For example, each dimming block may include 12 light sources, but the number and arrangement of light sources included in each dimming block are not limited.

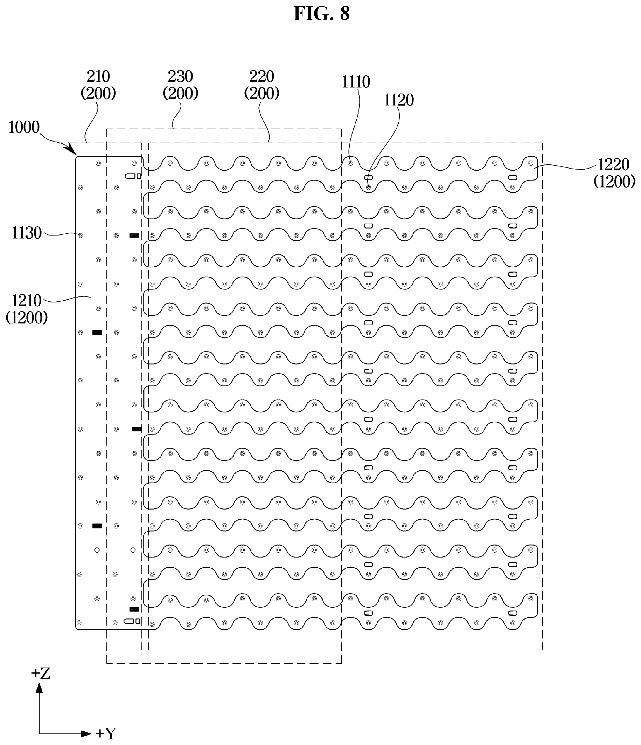

FIG. 8 shows an example of a dimming block of a light source device in a display apparatus according to an embodiment of the present disclosure.

Referring to FIG. 8, as described above, the light source device 1000 may include the substrate 1200 provided with the plurality of light sources 1100 and the driving elements 1400. The substrate 1200 may include the substrate body 1210 extending along the first direction Z, and the plurality of substrate bars 1220 extending from the substrate body 1210 in the second direction Y and arranged to be spaced apart from each other along the first direction Z. A plurality of first light sources 1130 among the plurality of light sources 1100 may be provided on the substrate body 1200. A plurality of second light sources 1110 and 1120 may be provided on the plurality of substrate bars 1220. The driving elements 1400 may be provided only on the substrate body 1210 among the substrate body 1210 and the plurality of substrate bars 1220, and may drive at least one dimming block.

As such, because the light source device 1000 according to the present disclosure includes the substrate 1200 having the substrate body 1210 and the plurality of substrate bars 1220 extending from the substrate body 1210, product cost and manufacturing cost may be reduced, and because the driving elements 1400 are provided only on the substrate body 1210 among the substrate body 1210 and the plurality of substrate bars 1220, wires of the driving elements 1400 and wires between the driving elements 1400 and the dimming blocks controlled by the driving elements 1400 may be simplified. Accordingly, the light source device 1000 of the display apparatus 1 according to an embodiment of the present disclosure may implement local dimming in more diverse ways.

More specifically, the substrate 1200 may be divided into the substrate body 1230 and the plurality of substrate bars 1220.

Local dimming for the dimming blocks 200 on one substrate 1200 may be implemented as follows.

First, a part or all of the light sources on the substrate body 1230 may implement local dimming with a first dimming block 210 constituting one dimming block.

Also, a part or all of the light sources on the plurality of substrate bars 1220 may implement local dimming with a second dimming block 220 constituting one dimming block.

Also, the light sources on the substrate body 1230 and the plurality of substrate bars 1220 may be used together to implement local dimming with a third dimming block 230 constituting one dimming block.

In a case where several substrates 1200 are applied to one set, the first dimming block 210 including the first light sources 1130 on the substrate body 1230, the second dimming block 220 including the second light sources 1110 and 1220 on the plurality of substrate bars 1220, and/or the third dimming block 230 including the light sources on the substrate body 1230 and the plurality of substrate bars 1220 among the dimming blocks 200 may be selectively freely used to implement local dimming.

At least one dimming block 200 driven by one driving element 1400 may include at least one among the first dimming block 210, the second dimming block 220, or the third dimming block 230.

As described above, the display apparatus 1 according to an embodiment of the present disclosure may achieve higher image quality and provide a more immersive screen to a viewer by implementing local dimming by configuring various dimming blocks with a degree of freedom of local dimming in a backlight unit using a wave-shaped finger type PCB. The display apparatus 1 according to an embodiment of the present disclosure may configure the same inch using about 20 to 25% fewer LEDs than a related art method. The number of local dimming blocks may also be reduced in proportion to the reduced number of LEDs, but local dimming may be configured with a small number of LEDs to achieve high image quality and reduce material cost. In addition, because the shape of the PCB has changed, local dimming may be freely implemented in various ways.

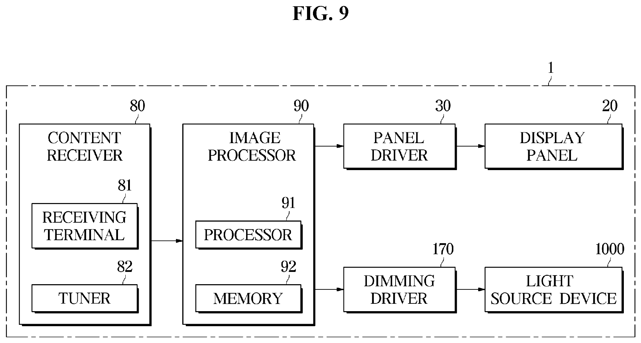

FIG. 9 is a control block diagram of a display apparatus according to an embodiment of the present disclosure.

Referring to FIG. 9, the display apparatus 1 may include a content receiver 80, an image processor 90, the panel driver 30, the display panel 20, a dimming driver 170, and the light source device 1000.

The content receiver 80 may include a receiving terminal 81 and a tuner 82 that receive content including a video signal and/or an audio signal from content sources.

The receiving terminal 81 may receive a video signal and an audio signal from the content sources through a cable. For example, the receiving terminal 81 may include a component (YPbPr/RGB) terminal, a composite video blanking and sync (CVBS) terminal, an audio terminal, a High Definition Multimedia Interface (HDMI) terminal, an Universal Serial Bus (USB) terminal, etc.

The tuner 82 may receive broadcasting signals from a broadcasting reception antenna or a wired cable. Also, the tuner 82 may extract a broadcasting signal of a channel selected by a user from among the broadcasting signals. For example, the tuner 82 may pass a broadcasting signal having a frequency corresponding to a channel selected by a user among a plurality of broadcasting signals received through the broadcasting reception antenna or the wired cable, and block broadcasting signals having the other frequencies.

As such, the content receiver 80 may receive a video signal and an audio signal from the content sources through the receiving terminal 81 and/or the tuner 82. The content receiver 80 may output the video signal and/or the audio signal received through the receiving terminal 81 and/or the tuner 82 to the image processor 90.

The image processor 90 may include a processor 91 that processes image data and memory 92 that memories/stores data and a program for processing image data.

The memory 92 may store a program and data for processing a video signal and/or an audio signal. Also, the memory 92 may temporarily memorize data generated while the video signal and/or the audio signal are processed.

The memory 92 may include non-volatile memory, such as Read Only Memory (ROM) and flash memory, and volatile memory, such as Static Random Access Memory (S-RAM) and Dynamic Random Access Memory (D-RAM).

The processor 91 may receive a video signal and/or an audio signal from the content receiver 80. The processor 91 may decode the video signal to image data. The processor 91 may generate dimming data from the image data. Also, the processor 91 may output the image data and dimming data to the panel driver 30 and the dimming driver 170, respectively.

As such, the image processor 90 may generate image data and dimming data from a video signal obtained by the content receiver 80. Also, the image processor 90 may transmit the image data and dimming data to the display panel 20 and the light source device 1000, respectively.

The image data may include information on an intensity of light that each of a plurality of pixels (or, a plurality of sub pixels) included in the display panel 20 transmits. The image data may be provided to the display panel 20 via the panel driver 30.

The display panel 20 may include a plurality of pixels capable of transmitting or blocking light, and the plurality of pixels may be arranged in a matrix form. In other words, the plurality of pixels may be arranged in a plurality of rows and a plurality of columns.

The panel driver 30 may receive image data from the image processor 90. The panel driver 30 may drive the display panel 20 according to the image data. In other words, the panel driver 30 may convert image data (hereinafter, referred to as 'digital image data') which is a digital signal into an analog image signal which is an analog voltage signal. The panel driver 30 may provide the converted analog image signal to the display panel 20. Optical properties (for example, light transmittance) of the plurality of pixels included in the display panel 20 may change according to the analog image signal.

The panel driver 30 may include, for example, a timing controller, a data driver, a scan driver, etc.

The timing controller may receive image data from the image processor 90. The timing controller may output the image data and a driving control signal to the data driver and the scan driver. The driving control signal may include a scan control signal and a data control signal, and the scan control signal and the data control signal may be used to respectively control an operation of the scan driver and an operation of the data driver.

The scan driver may receive a scan control signal from the timing controller. The scan driver may input-activate any one of the plurality of rows in the display panel 20 according to the scan control signal. In other words, the scan driver may convert pixels included in any row among the plurality of pixels arranged in the plurality of rows and the plurality of columns to a state capable of receiving an analog image signal. At this time, the other pixels except for the pixels input-activated by the scan driver may not receive an analog image signal.

The data driver may receive image data and a data control signal from the timing controller. The data driver may output the image data to the display panel 20 according to the data control signal. For example, the data driver may receive digital image data from the timing controller. The data driver may convert the digital image data into an analog image signal. Also, the data driver may provide the analog image signal to pixels included in any row input-activated by the scan driver. At this time, the pixels input-activated by the scan driver may receive the analog image signal. Optical properties (for example, light transmittance) of the input-activated pixels may change according to the received analog image signal.

As such, the panel driver 30 may drive the display panel 20 according to the image data. Therefore, an image corresponding to the image data may be displayed on the display panel 20.

In an embodiment, the dimming data may include information on an intensity of light that each of the plurality of light sources (or, the plurality of dimming blocks 200) included in the light source device 1000 transmits. The dimming data may be provided to the light source device 1000 via the dimming driver 170.

The image processor 90 may provide dimming data for local dimming to the light source device 1000. The dimming data may include information on brightness of each of the plurality of dimming blocks 200. For example, the dimming data may include information on an intensity of light that light sources included in each of the plurality of dimming blocks 200 output.

The image processor 90 may obtain dimming data from image data.

The image processor 90 may convert image data into dimming data by various methods. For example, the image processor 90 may divide an image I by image data into a plurality of image blocks. The number of the plurality of image blocks may be equal to the number of the plurality of dimming blocks 200, and the plurality of image blocks may respectively correspond to the plurality of dimming blocks 200.

The image processor 90 may obtain brightness values of the plurality of dimming blocks 200 from image data of the plurality of image blocks. Also, the image processor 90 may generate dimming data by combining the brightness values of the plurality of dimming blocks 200.

For example, the image processor 90 may obtain a brightness value of each of the plurality of dimming blocks 200 based on a maximum value of brightness values of pixels included in each of the image blocks.

An image block may include a plurality of pixels, and image data of an image block may include image data (for example, red data, green data, blue data, etc.) of a plurality of pixels. The image processor 90 may calculate a brightness value of each of the pixels based on image data of the pixel.

The image processor 90 may determine a maximum value of brightness values of pixels included in an image block as a brightness value of a dimming block 200 corresponding to the image block. For example, the image processor 90 may determine a maximum value of brightness values of pixels included in an i-th image block as a brightness value of an i-th dimming block, and determine a maximum value of the brightness values of pixels included in a j-th image block as a brightness value of a j-th dimming block.

The image processor 90 may generate dimming data by combining the brightness values of the plurality of dimming blocks 200.

The dimming driver 170 may receive the dimming data from the image processor 90. The dimming driver 170 may drive the light source device 1000 according to the dimming data. Here, the dimming data may include information on brightness of each of the plurality of dimming blocks 200 or information on brightness of light sources included in each of the plurality of dimming blocks 200.

The dimming driver 170 may include, for example, a timing controller, a data driver, a scan driver, etc.

The dimming driver 170 may convert dimming data which is a digital voltage signal into an analog driving current.

The dimming driver 170 may sequentially provide the analog dimming signal to the driving elements 1400 respectively corresponding to the dimming blocks 200 by, for example, an active matrix method.

The plurality of dimming blocks 200 may be divided into a plurality of groups. For example, three dimming blocks 200 may form one group. Dimming blocks 200 belonging to the same group may be supplied a driving current simultaneously, and dimming blocks 200 belonging to different groups may be supplied a driving current sequentially at different times. The dimming driver 170 may activate dimming blocks 200 belonging to any of the plurality of groups, and provide an analog dimming signal to the activated dimming blocks 200. Thereafter, the dimming driver 170 may activate the dimming blocks 200 belonging to the different groups and provide an analog dimming signal to the activated dimming blocks 200.

The dimming driver 170 may activate dimming blocks 200 belonging to one group and provide an analog dimming signal to the activated dimming blocks 200. Thereafter, the dimming driver 170 may activate inputs of dimming blocks belonging to another row and provide an analog dimming signal to the dimming blocks 200 with the activated inputs.

To activate dimming blocks 200 belonging to any block among the plurality of groups, the dimming driver 170 may transfer a driving signal to the driving elements 1400. The driving signal may be a signal for supplying power to the driving drivers 1400.

According to various embodiments, the driving signal may be transferred directly from the dimming driver 170 to the plurality of dimming blocks or from the driving elements 300 to the plurality of dimming blocks 200.

A driving circuit of each of the dimming blocks 200 may provide an analog driving current corresponding to an analog dimming signal to the light source device 1000. By the analog driving current, light sources 1100 included in the light source device 1000 may emit light. Light sources belonging to the same dimming block 200 may emit light with the same intensity according to dimming data. Also, light sources belonging to different dimming blocks 200 may emit light with different intensities according to dimming data.

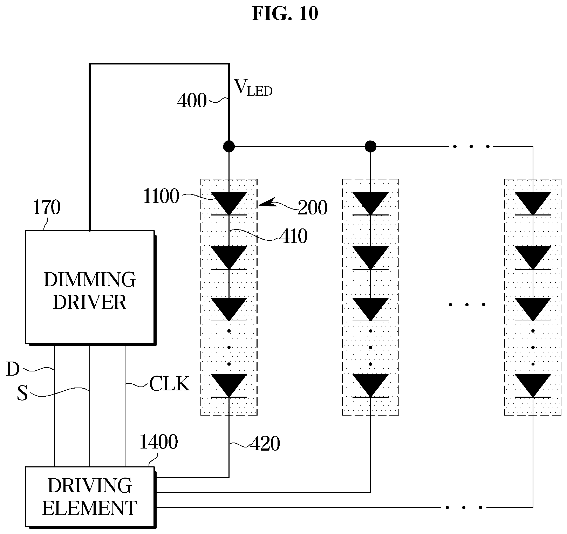

FIG. 10 shows an example of a connection structure between a dimming driver, a driving element, and a dimming block of a display apparatus according to an embodiment of the present disclosure.

Referring to FIG. 10, each of the plurality of dimming blocks 200 may include a plurality of LEDs 1100 connected in series to each other.

For example, each of the plurality of dimming blocks 200 may receive a driving voltage V_{LED} through a power line 400.

For example, each of the plurality of dimming blocks 200 may be electrically connected to the driving element 1400. The driving element 1400 may control a driving current that flows through each of the plurality of dimming blocks 200.

Under an assumption that one dimming block 200 includes a first light-emitting diode, a second light-emitting diode, a third light-emitting diode, and a fourth light-emitting diode, an anode of the first light-emitting diode may be connected to the power line, a cathode of the first light-emitting diode may be connected to an anode of the second light-emitting diode, a cathode of the second light-emitting diode may be connected to an anode of the third light-emitting diode, a cathode of the third light-emitting diode may be connected to an anode of the fourth light-emitting diode, and a cathode of the fourth light-emitting diode may be connected to the driving element 1400.

In an embodiment, among the plurality of light sources 1100 included in one dimming block 200 and connected in series to each other, a first light source 1100 in the serial connection may be connected to the power line 400 and receive the driving voltage V_{LED}, and a last light source 1100 in the serial connection may be connected to the driving element 1400.

In another embodiment, among the plurality of light sources 1100 included in one dimming block 200 and connected in series to each other, a first light source 1100 in the serial connection may be connected to the driving element 1400 and receive the driving voltage V_{LED}, and a last light source 1100 in the serial connection may be connected to the driving element 1400.

While the driving elements 1400 are input-activated by the dimming driver 170, the driving elements 1400 may receive an analog dimming signal from the dimming driver 170 and store the received analog dimming signal. Also, while the driving elements 1400 are input-deactivated, the plurality of driving elements 1400 may supply a driving current corresponding to the stored analog dimming signal to the plurality of light sources (light-emitting diodes) 1100.

While the driving voltage V_{LED} is applied to the plurality of dimming blocks 200, the driving elements 1400 may control a driving current that is supplied to each of the plurality of dimming blocks 200.

To this end, the display apparatus 1 may include a data line D that provides an analog dimming signal to the plurality of driving elements 1400, a scan line S that provides a scan signal to the plurality of driving elements 1400, and/or a clock line CLK that provides a clock signal as a timing signal to the plurality of driving elements 1400.

Also, the display apparatus 1 may include the power line 400 for providing a driving voltage to the plurality of driving elements 1400.

The data line D, the scan line S, the power line 400, etc. may be formed on the substrate 1200.

The plurality of driving elements 1400 may include various topology circuits to implement driving based on the active-matrix method.

For example, each of the plurality of driving elements 1400 may include, but is not limited to, a one capacitor two transistor (1C2T) topology circuit. For example, the driving element 1400 may include a 3T1C topology circuit to which a transistor for correcting a body effect of a driving transistor is added.

The driving element 1400 may be provided, for example, as a single chip into which driving circuits are integrated. In other words, driving circuits may be integrated into a single semiconductor chip.

The dimming driver 170 may transmit a data signal, which is a dimming signal corresponding to an input image, to the plurality of driving elements 1400 through the data line D.

Also, the dimming driver 170 may transmit a scan signal to the plurality of driving elements 1400 through the scan line S.

Also, the dimming driver 170 may transmit a clock signal corresponding to a light-emitting time of the plurality of dimming blocks 200 to the plurality of driving elements 1400 through the clock line CLK.

The plurality of driving elements 300 may control a driving current that is supplied to each of the plurality of dimming blocks 200, based on a data signal, a scan signal and/or a clock signal.

FIG. 10 shows only a part of the plurality of dimming blocks 200. The display apparatus 1 according to an embodiment of the present disclosure may require more dimming blocks 200, driving elements 300, and data lines D, scan lines S, and power lines 400 connecting the dimming blocks 200 and driving elements 300 for local dimming.

In an embodiment, the wires may include wires 410 that connect the data lines D, the scan lines S, the power lines 400, and the plurality of light sources in the plurality of dimming block 200, wires 420 that connects the driving elements 1400 and the plurality of dimming blocks 200, etc., but the kinds of the wires are not limited thereto.

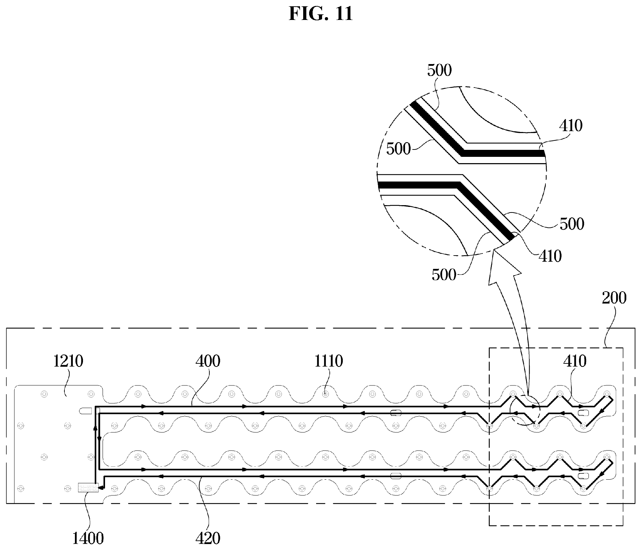

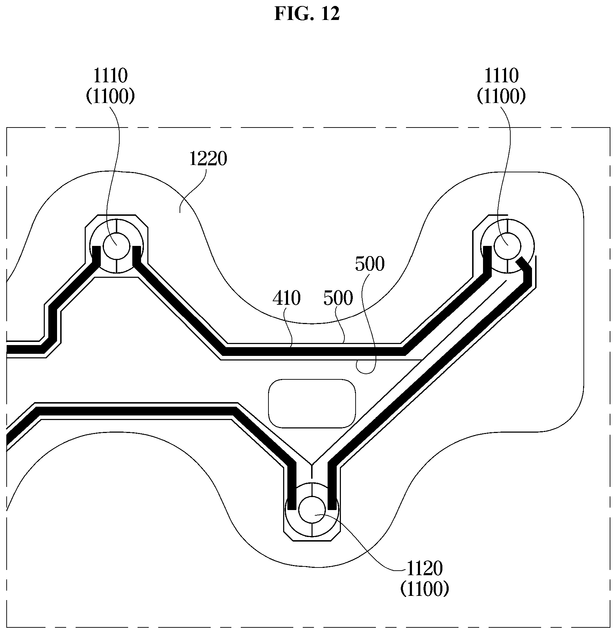

FIG. 11 shows an example of a connection structure between a driving element and a dimming block of a light source device in a display apparatus according to an embodiment of the present disclosure. FIG. 12 shows an example of a substrate wire of a light source device in a display apparatus according to an embodiment of the present disclosure.

Referring to FIGS. 11 and 12, one driving element 1400 may drive multiple dimming blocks, such as 6 channels or 8 channels. As distances between a driving element 1400 and LEDs 1110 and 1120 in a dimming block 200 driven by the driving element 1400 increase, lengths of connection wires 400, 410, and 420 may increase, which may cause noise.

In the case of related art flat PCBs, because distances between driving elements and LEDs are relatively short, such noise may be relatively less caused. To cancel the noise, it may be required to shorten distances between driving elements and LEDs, as in the related are case.

However, because the light source device 1000 of the display apparatus 1 according to an embodiment of the present disclosure includes the substrate 1200 of the wave-shaped finger type PCB and the driving elements 1400 are provided only on the substrate body 1210 of the substrate 1200, the distances between the driving elements 1400 and the LEDs 1110 and 1120 may be relatively long. Therefore, in a case where one or more LEDs 1110 and 1120 located far from the driving elements 1400 are driven by one dimming block, the lengths of the connection wires 400, 410, and 420 may become long, resistance values may also increase, and there may be a great influence by various external noise. As a result, noise such as flicker may be generated.

The light source device 1000 of the display apparatus 1 according to an embodiment of the present disclosure may include a ground wire 500 that cancels noise of the connection wires 400, 410, and 420 that electrically connect the driving elements 1400 and the plurality of dimming blocks 200.

The ground wire 500 may cancel noise of a dimming block 200 located farthest from the driving elements 1400 among the plurality of dimming blocks 200.

The ground wire 500 may be adjacent to the connection wires 400, 410, and 420. The ground wire 500 may be spaced apart from the connection wires 400, 410, and 420.

A plurality of ground wires 500 may be provided.

The ground wires 500 may be arranged to both sides of the connection wires 400, 410, and 420.

For example, by arranging the ground wires 500 to both sides of the connection wires 400, 410, and 420, noise caused by electromagnetic induction flowing into the connection wires 400, 410, and 420 may be canceled.

The ground wires 500 may be arranged to both sides of at least one among the power line 400, the wire 410 connecting the plurality of light sources within the plurality of dimming blocks 200, or the wire 420 connecting the driving element 1400 and the plurality of dimming blocks 200, which are the connection wires 400, 410, and 420.

In this way, noise of the plurality of dimming blocks 200 may be canceled regardless of the distances between the driving elements 1400 and the plurality of dimming blocks 200.

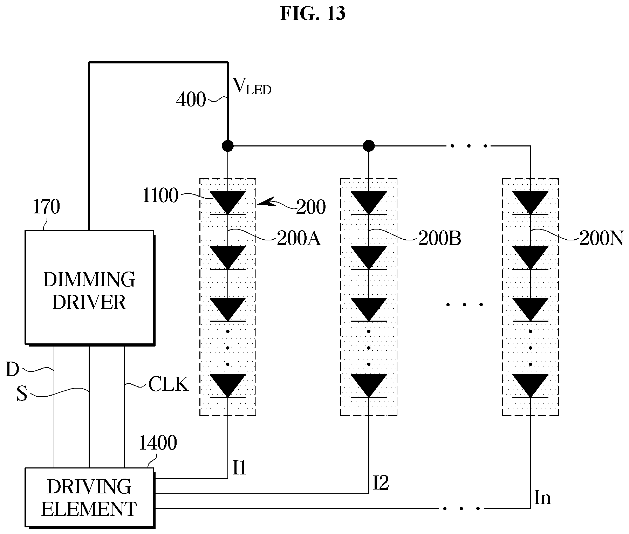

FIG. 13 shows an example of adjusting currents of a plurality of dimming blocks based on distances between a driving element and the plurality of dimming blocks of a light source device in a display apparatus according to an embodiment of the present disclosure.

Referring to FIG. 13, a resistance value increased due to long lengths of the connection wires 400, 410, and 420 may cause loss of current. As a result, a difference between brightness of a LED close to the driving element 1440 and brightness of a LED distant from the driving element 1400 may be made. To prevent this, by increasing a current of the distant LED compared to the close LED, the LEDs may express the same brightness.

The driving element 1400 may adjust currents of the plurality of dimming blocks 200 based on distances between the driving element 1400 and the plurality of dimming blocks 200.

The driving element 1400 may further increase a current of a dimming block that is distant from the driving element 1400 than that of a dimming block that is closer to the driving element 1400 among the plurality of dimming blocks.

For example, in a case where among the plurality of dimming blocks 200, an order of distances from the driving element 1400 is a first dimming block 200A, a second dimming block 200B, ..., a Nth dimming block 200N, a driving current In of the Nth dimming block 200N may be increased to be higher than a driving current I1 of the first dimming block 200A.

Meanwhile, in a case where LEDs in the same dimming block are individually adjustable, a driving current of a distant LED in the same dimming block may be further increased than that of a close LED in the same dimming block.

In this way, the plurality of dimming blocks 200 may be implemented to have the same brightness regardless of the distances between the driving element 1400 and the plurality of dimming blocks 200.

In a case where local dimming is implemented by the above-described method, the plurality of dimming blocks 200 may express the same brightness without noise regardless of the distances between the driving element 1400 and the plurality of dimming blocks 200.

A display apparatus 1 according to an embodiment of the present disclosure may include: an image display 20; and a light source device 1000, wherein the light source device 1000 may include: a substrate including a substrate body 1210 extending along a first direction Z, and a plurality of substrate bars 1220 extending from the substrate body 1210 in a second direction Y and spaced apart from each other along the first direction Z; a plurality of light sources 1100 including a plurality of first light sources provided on the substrate body 1210 and a plurality of second light sources provided on the plurality of substrate bars 1220, the plurality of light sources 1100 configured to radiate light toward the image display 20; at least one dimming block 200 including at least one light source among the plurality of light sources 1100; and a driving element 1400 provided on the substrate body 1210 among the substrate body 1210 and the plurality of substrate bars 1220 and configured to drive the at least one dimming block, and the at least one dimming block 200 may include at least one among a first dimming block 210 including the first light sources, a second dimming block 220 including the second light sources, or a third dimming block 230 including the first light sources and the second light sources.

The driving element 1400 may include a plurality of driving elements 1400, and the plurality of driving elements 1400 may be arranged at different positions in the first direction Z such that some driving elements 1400 of the plurality of driving elements 1400 are arranged at different positions in the second direction Y from positions of other driving elements 1400 among the plurality of driving elements 1400.

The plurality of driving elements 1400 may include driving elements 1400 on a first row, arranged along the first direction Z, and driving elements 1400 on a second row, spaced apart from the driving elements 1400 on the first row and arranged along the first direction Z, and each driving element 1400 included in the driving elements 1400 on the first row may be spaced in the second direction Y apart from each driving element 1400 included in the driving elements 1400 on the second row.

The at least one dimming block 200 may include a plurality of dimming blocks 200, and
the display apparatus 1 may further include a ground wire 500 provided on the substrate 1200 and configured to cancel noise of one or more dimming blocks 200 among the plurality of dimming blocks 200.

The ground wire 500 may be positioned adjacent to a connection wire 400, 410, or 420 that electrically connects the driving element 1400 and the plurality of dimming blocks.

The ground wire 500 may include a plurality of ground wires 500, and the plurality of ground wires 500 may be arranged to both sides of the connection wire 400, 410, or 420.

The ground wire 500 may be configured to cancel noise of a dimming block that is most distant from the driving element 1400 among the plurality of dimming blocks.

The at least one dimming block 200 may include a plurality of dimming blocks 200, light sources belonging to the same dimming block receive the same current, and the driving element 1400 may be configured to adjust currents of the plurality of dimming blocks 200 based on distances between the driving element 1400 and the plurality of dimming blocks 200.

The driving element 1400 may be configured to further increase a current of a dimming block that is distant from the driving element than that of a dimming block that is close to the driving element.

The at least one dimming block 200 may include a plurality of dimming blocks 200, and
the plurality of dimming blocks 200 may include the second dimming block 220 and the third dimming block 230.

Each of the plurality of substrate bars 1220 may include: a central extension portion 1221 extending in the second direction Y that is different from the first direction Z; a plurality of first protrusions 1222a protruding from one side of the central extension portion 1221 in the first direction Z toward outside of the central extension portion 1221 and arranged along the second direction Y, wherein a part of the plurality of light sources 110 is mounted on the plurality of first protrusions 1222a; a plurality of first recess portions 1223a each formed between a pair of first protrusions 1222a being adjacent to each other among the plurality of first protrusions 1222a; a plurality of second protrusions 1222b protruding from another side of the central extension portion 1221 in the first direction Z to the outside of the central extension portion 1221 and arranged along the second direction Y, wherein another part of the plurality of light sources 1100 are mounted on the plurality of second protrusions 1222b; and a plurality of second recess portions 1223b each formed between a pair of second protrusions 1222b being adjacent to each other among the plurality of second protrusions 1222b, a shape of an edge of each of the plurality of first recess portions 1223a may be different from a shape of an edge of each of the plurality of second protrusions 1222b, and a shape of an edge of each of the plurality of second recess portions 1223b may be different from a shape of an edge of each of the plurality of first protrusions 1222a.

A light source device 1000 according to an embodiment of the present disclosure may include: a substrate including a substrate body 1210 extending in a first direction Z, and a plurality of substrate bars 1220 extending from the substrate body 1210 in a second direction Y and arranged to be spaced apart from each other along the first direction Z; a plurality of light sources 1100 including a plurality of first light sources provided on the substrate body 1210 and a plurality of second light sources provided on the plurality of substrate bars 1220, and configured to radiate light toward an image display 20; at least one dimming block including at least one light source among the plurality of light sources 1100; and a driving element 1400 provided on the substrate body 1210 among the substrate body 1210 and the plurality of substrate bars 1220 and configured to drive the at least one dimming block, wherein the at least one dimming block 200 may include at least one among a first dimming block 210 including the first light sources, a second dimming block 220 including the second light sources, or a third dimming block 230 including the first light sources and the second light sources.

The driving element 1400 may include a plurality of driving elements 1400, the plurality of driving elements 1400 may include driving elements 1400 on a first row, arranged along the first direction Z, and driving elements 1400 on a second row, spaced from the driving elements 1400 on the first row and arranged along the first direction Z, and each driving element 1400 included in the driving elements 1400 on the first row may be spaced in the second direction Y apart from each driving element 1400 included in the driving elements 1400 on the second row.

The at least one dimming block 200 may include a plurality of dimming blocks 200, the light source device may further include a ground wire 500 provided on the substrate 1200 and configured to cancel noise of one or more dimming blocks 200 among the plurality of dimming blocks 200.

The ground wire 500 may be positioned adjacent to a connection wire 400, 410, or 420 that electrically connects the driving element 1400 and the plurality of dimming blocks 200.

The ground wire 500 may include a plurality of ground wires 500, and the plurality of ground wires 500 may be arranged to both sides of the connection wire 400, 410, or 420.

The ground wire 500 may be configured to cancel noise of a dimming block that is most distant from the driving element 1400 among the plurality of dimming blocks 200.

The at least one dimming block 200 may include a plurality of dimming blocks 200, light sources belonging to the same dimming block may receive the same current, and the driving element 1400 may be configured to adjust currents of the plurality of dimming blocks 200 based on distances between the driving element 1400 and the plurality of dimming blocks 200.

The driving element 1400 may be configured to further increase a current of a dimming block that is distant from the driving element 1400 than that of a dimming block that is close to the driving element 1400.

The at least one dimming block 200 may include a plurality of dimming blocks 200, and the plurality of dimming blocks 200 may include the second dimming block 220 and the third dimming block 230.

Meanwhile, the disclosed embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium.

The computer-readable recording medium may include all kinds of recording media storing instructions that can be interpreted by a computer. For example, the computer-readable recording medium may be read only memory (ROM), random access memory (RAM), a magnetic tape, a magnetic disc, a flash memory, an optical data storage device, etc.

Also, the computer-readable storage medium may be provided in the form of a non-transitory storage medium, wherein the term 'non-transitory' simply means that the storage medium is a tangible device, and does not include a signal (for example, an electromagnetic wave), but this term does not differentiate between where data is semi-permanently stored in the storage medium and where the data is temporarily stored in the storage medium. For example, a 'non-transitory storage medium' may include a buffer in which data is temporarily stored.

According to an embodiment, the method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloadable or uploadable) online via an application store (e.g., Play Store^{TM}) or between two user devices (e.g., smart phones) directly. When distributed online, at least part of the computer program product (e.g., a downloadable app) may be temporarily generated or at least temporarily stored in the machine-readable storage medium, such as a memory of the manufacturer's server, a server of the application store, or a relay server.

So far, the disclosed embodiments have been described with reference to the accompanying drawings. It will be understood by one of ordinary skill in the technical art to which the disclosure belongs that the disclosure can be embodied in different forms from the disclosed embodiments without changing the technical spirit and essential features of the present disclosure. Thus, it should be understood that the disclosed embodiments described above are merely for illustrative purposes and not for limitation purposes in all aspects.

## Claims

1. A display apparatus comprising:
an image display; and
a light source device,
wherein the light source device comprises:
a substrate comprising a substrate body extending along a first direction, and a plurality of substrate bars extending from the substrate body in a second direction and spaced apart from each other along the first direction;
a plurality of light sources comprising a plurality of first light sources provided on the substrate body and a plurality of second light sources provided on the plurality of substrate bars, the plurality of light sources configured to radiate light toward the image display;
at least one dimming block comprising at least one light source among the plurality of light sources; and
a driving element provided on the only substrate body among the substrate body and the plurality of substrate bars and configured to drive the at least one dimming block,
wherein the at least one dimming block comprises at least one of a first dimming block comprising the first light sources, a second dimming block comprising the second light sources, or a third dimming block comprising the first light sources and the second light sources.

2. The display apparatus of claim 1, wherein
the driving element comprises a plurality of driving elements, and
wherein the plurality of driving elements are arranged at different positions in the first direction such that some driving elements of the plurality of driving elements are arranged at different positions in the second direction from positions of other driving elements among the plurality of driving elements.

3. The display apparatus of claim 2, wherein
the plurality of driving elements comprise
driving elements on a first row, arranged along the first direction, and
driving elements on a second row, spaced apart from the driving elements on the first row and arranged along the first direction, and
wherein each driving element included in the driving elements on the first row is spaced in the second direction apart from each driving element included in the driving elements on the second row.

4. The display apparatus of claim 1, wherein
the at least one dimming block comprises a plurality of dimming blocks,
wherein the display apparatus further comprising a ground wire provided on the substrate and configured to cancel noise of one or more dimming blocks of the plurality of dimming blocks.

5. The display apparatus of claim 4, wherein
the ground wire is positioned adjacent to a connection wire that electrically connects the driving element and the plurality of dimming blocks.

6. The display apparatus of claim 5, wherein
the ground wire comprises a plurality of ground wires, and
wherein the plurality of ground wires are arranged to both sides of the connection wire.

7. The display apparatus of claim 4, wherein
the ground wire is configured to cancel noise of a dimming block that is most distant from the driving element among the plurality of dimming blocks.

8. The display apparatus of claim 1, wherein
the at least one dimming block comprises a plurality of dimming blocks, light sources belonging to the same dimming block receive the same current, and
wherein the driving element is configured to adjust a current of each of the plurality of dimming blocks based on a distance between the driving element and each of the plurality of dimming blocks.

9. The display apparatus of claim 8, wherein
the driving element is configured to further increase a current of a dimming block that is distant from the driving element than that of a dimming block that is close to the driving element.

10. The display apparatus of claim 1, wherein
the at least one dimming block comprises a plurality of dimming blocks, and
wherein the plurality of dimming blocks comprises the second dimming block and the third dimming block.

11. The display apparatus of claim 1, wherein
each of the plurality of substrate bars comprises:
a central extension portion extending in the second direction that is different from the first direction;
a plurality of first protrusions protruding from one side of the central extension portion in the first direction an toward outside of the central extension portion and arranged along the second direction, wherein a part of the plurality of light sources is mounted on the plurality of first protrusions;
a plurality of first recess portions each formed between a pair of first protrusions being adjacent to each other among the plurality of first protrusions;
a plurality of second protrusions protruding from another side of the central extension portion in the first direction to the outside of the central extension portion and arranged along the second direction, wherein another part of the plurality of light sources is mounted on the plurality of second protrusions; and
a plurality of second recess portions each formed between a pair of second protrusions being adjacent to each other among the plurality of second protrusions,
wherein a shape of an edge of each of the plurality of first recess portions is different from a shape of an edge of each of the plurality of second protrusions, and
wherein a shape of an edge of each of the plurality of second recess portions is different from a shape of an edge of each of the plurality of first protrusions.

12. A light source device comprising:
a substrate comprising a substrate body extending in a first direction, and a plurality of substrate bars extending from the substrate body in a second direction and arranged to be spaced apart from each other along the first direction;
a plurality of light sources comprising a plurality of first light sources provided on the substrate body and a plurality of second light sources provided on the plurality of substrate bars, and configured to radiate light toward an image display;
at least one dimming block comprising at least one light source among the plurality of light sources; and
a driving element provided on only the substrate body among the substrate body and the plurality of substrate bars and configured to drive the at least one dimming block,
wherein the at least one dimming block comprises at least one among a first dimming block comprising the first light sources, a second dimming block comprising the second light sources, or a third dimming block comprising the first light sources and the second light sources.

13. The light source device of claim 12, wherein
the driving element comprises a plurality of driving elements,
wherein the plurality of driving elements comprises:
driving elements on a first row, arranged along the first direction, and
driving elements on a second row, spaced from the driving elements on the first row and arranged along the first direction, and
each driving element included in the driving elements on the first row is spaced in the second direction apart from each driving element included in the driving elements on the second row.

14. The light source device of claim 12, wherein
the at least one dimming block comprises a plurality of dimming blocks,
wherein the light source device further comprising a ground wire provided on the substrate and configured to cancel noise of one or more dimming blocks of the plurality of dimming blocks.

15. The light source device of claim 14, wherein
the ground wire is positioned adjacent to a connection wire that electrically connects the driving element and the plurality of dimming blocks.
